# EUROPÄISCHE PATENTSCHRIFT

(11) **EP 3 008 803 B1**
(45) Veröffentlichungstag und Bekanntmachung des Hinweises auf die Patenterteilung: **27.03.2019**
(21) Anmeldenummer: 14731132.8
(22) Anmeldetag: 11.06.2014
(51) Int. Cl.: H02J 50/12, H02J 50/90, H02J 7/04, H02J 7/00, H02J 7/02

(54) **LADEVERFAHREN UND HANDGERÄT FÜR MOBILES ELEKTROKLEINGERÄT**
CHARGING METHOD AND HAND-HELD DEVICE FOR MOBILE SMALL-SCALE ELECTRICAL DEVICE
PROCEDE DE CHARGEMENT ET APPAREIL MANUEL POUR PETIT APPAREIL ÉLECTRIQUE MOBILE

(30) Priorität: 14.06.2013 EP 13405071
(43) Veröffentlichungstag der Anmeldung: 20.04.2016
(73) Patentinhaber: Trisa Holding AG, 6234 Triengen (CH)
(72) Erfinder: FISCHER, Franz, CH-6234 Triengen (CH); MEIER, Hanspeter, CH-4900 Langenthal (CH)
(74) Vertreter: Frei Patent Attorneys
(86) Internationale Anmeldenummer: PCT/CH2014/000080
(87) Internationale Veröffentlichungsnummer: WO 2014/198005

(56) Entgegenhaltungen:
- US-A- 6 016 046
- US-A1- 2002 141 208
- US-A1- 2006 197 493
- US-A1- 2008 205 919
- US-A1- 2010 177 537
- US-A1- 2011 025 264
- US-A1- 2012 112 543
- US-A1- 2012 313 579

## Beschreibung

Die Erfindung bezieht sich auf das Gebiet der mobilen Elektrokleingeräte und insbesondere der kontaktlosen Energieversorgung von solchen.

Mobile Elektrokleingeräte wie elektrische Zahnbürsten und Geräte zur Körperpflege können kabellos ausgebildet sein, und demzufolge Akkus aufweisen, welche über eine kabellose Energieversorgung geladen werden können. Dazu kann ein Handgerät (oder Handteil) in oder auf ein Ladegerät (oder Ladeteil) gesetzt werden, oder auch nur in dessen räumliche Nähe gebracht werden, so dass eine induktive Energieübertragung vom Ladegerät an das Handgerät möglich ist.

EP 2207250 respektive US 8,319,376 zeigt die Detektion einer Belastung eines induktiven Energieübertragers, indem die Spannung über einer Primärwicklung des Energieübertragers gemessen wird. Ein Oszillator wird intermittierend eingeschaltet um eine Last zu detektieren. Wird keine Last detektiert, so wird der Aussteuerungsgrad eines PWM-Signals zur Speisung des Oszillators reduziert.

US 2010/0177537 offenbart eine Schaltung in welcher zur Anpassung an wechselnde Netzspannungen eine Feedback-Wicklung eines Energieübertragers einen Ausschaltkondensator lädt. Die Spannung am Ausschaltkondensator steuert über einen Ausschalttransistor einen Schwingkreistransistor. Je höher die Eingangsspannung ist, desto schneller ist der Ausschaltkondensator geladen und sperrt der Schwingkreistransistor. Damit wird eine zu hohe Spannung am Schwingkreistransistor vermieden.

US 2002/0141208 beschreibt eine Schaltung in welcher eine Feedback-Wicklung eines Energieübertragers einen Kondensator lädt, der mit einem Steuereingang eines Schalters eines Schwingkreises verbunden ist. Das Zusammenspiel dieser Elemente ist nicht detailliert beschrieben, soll aber gemäss einem Beispiel einen Primärstrom und eine Primärspannung reduzieren, wenn kein Last an der Sekundärseite anliegt.

US 2008/205919 zeigt eine Ladestation und ein schnurloses Telefon, wobei das schnurlose Telefon induktiv ladbar ist. Ein Strom oder eine Spannung im Primärschwingkreis wird über einen Messwiderstand gemessen, und es wird nach Massgabe dieser Messung die Speisung des Primärschwingkreises unterbrochen. Die Speisung wird nur fortgesetzt, wenn der Strom über einem gewissen Grenzwert liegt. Wenn der Strom in einem gewissen Band unter diesem Grenzwert liegt, wird gefolgert, dass sich ein metallischer Fremdkörper in der Ladestation befindet. Es kann dann der Primärschwingkreis intermittierend gespeist werden, um festzustellen, ob sich ein Handgerät oder ein metallischer Fremdkörper oder kein solcher in der Ladestation befindet.

US 2012/112543 beschreibt eine Ladestation für ein mobiles Gerät. Das mobile Gerät kann die Ladestation aktiv aus einem Standby-Modus aufwecken, indem das mobile Gerät einen Strom in der Ladestation induziert. Eine Detektionsschaltung erkennt diesen Strom und weckt die Ladestation auf.

US 2012/313579 zeigt ein Verfahren zum Feststellen, ob sich ein metallischer Fremdkörper im Wirkungsbereich eines induktiven Energieübertragers befindet.

US 7933870 beschreibt die Detektion einer Last an einem induktiven Energieübertrager durch Messung der Selbstinduktivität an der Primärseite.

EP 2441155 A1 zeigt ein Netzteil mit induktiver Übertragung von Energie, mit mehreren Betriebszuständen in Abhängigkeit einer Belastung. Die Belastung wird anhand einer in einem Oszillator auftretenden elektrischen Grösse ermittelt. In einem Standby-modus wird ein Ausgang des Netzteils über einen kleinen Widerstand an Masse gelegt und dadurch die Versorgungsspannung des Oszillators verändert.

EP 0758153 B1 beschreibt einen Kleintransformator. Zur Messung, ob ein Verbraucher am Transformator Leistung bezieht, wird über eine primärseitige Zusatzwicklung ein Signal entsprechend der Sättigung des Transformator erfasst. Liegt kein Verbraucher an, wird der Transformator primärseitig stromlos geschaltet. Die Messung kann periodisch geschehen, wozu gegebenenfalls der Trafo kurzzeitig gespeist wird.

EP 1022840 B1 offenbart ein induktives Ladegerät. Eine Last wird von einem metallischen Störobjekt unterschieden, indem eine Speisefrequenz zwischen verschiedenen Werten umgeschaltet wird und aus der Amplitude des resultierenden Stromes geschlossen wird, ob eine mitschwingende und zu ladende Last vorliegt.

EP 0982831 B1 offenbart ebenfalls ein induktives Ladegerät. Eine Last identifiziert sich, indem die Last Energie in hochfrequenten Bursts aufnimmt. Dadurch ist für die Primärseite erkennbar, dass die Last vorliegt.

DE 2652700 A1 und DE 4100272 A1 zeigen Ladegeräte mit transformatorischer Kopplung. Eine Leistungseinspeisung wird anhand einer Spannung geregelt, welche an einer Hilfswicklung abgegriffen wird.

US 6,016,046 zeigt ein Ladeverfahren für einen Akku eines Handgerätes, welches die Spannung über und den Strom durch den Akku misst, um dessen Ladezustand zu bestimmen.

US 2011/0025264 A1 lehrt, abwechselnd ein Mobilgerät induktiv zu laden und mit diesem kommunizieren. Das Laden wird, falls eine Akkuspannung einen vorgegebenen Wert unterschreitet, während eines festen Zeitintervalls durchgeführt, und anschliessend wird wieder kommuniziert, dann wieder geladen, ... etc.

Es ist eine mögliche Aufgabe der Erfindung, ein Ladegerät für ein mobiles Elektrokleingerät zu schaffen, welches einen vergleichsweise geringen Energieverbrauch aufweist. Es wird darauf hingewiesen, dass in der vorliegenden Anmeldung die Begriffe Batterie und Akku synonym verwendet werden und einen wiederaufladbaren Energiespeicher bezeichnen.

Eine weitere mögliche Aufgabe ist, ein Ladegerät für ein mobiles Elektrokleingerät zu schaffen, welches insbesondere bei geladenem Akku eines Handgerätes und/oder bei nicht eingesetztem Handgerät eine möglichst geringe Energieaufnahme aufweist.

Eine weitere mögliche Aufgabe ist, ein Ladegerät für ein mobiles Elektrokleingerät zu schaffen, welches dazu einen einfachen Aufbau aufweist und insbesondere mit diskreten Bauelementen realisierbar ist.

Eine weitere mögliche Aufgabe ist, ein Ladegerät für ein mobiles Elektrokleingerät zu schaffen, welches mit verschieden hohen Speisespannungen arbeitet und/oder in unterschiedlichen Versorgungsnetzen einsetzbar ist.

Eine weitere mögliche Aufgabe ist, ein Ladegerät für ein mobiles Elektrokleingerät zu schaffen, welches eine Bedienbarkeit des Handgeräts verbessert.

Eine weitere mögliche Aufgabe ist, ein Handgerät oder Handteil für ein mobiles Elektrokleingerät zu schaffen, welches ein ungewolltes Entladen eines Energiespeichers des Handgerätes verhindert, wenn das Handgerät in das Ladegerät eingesetzt ist.

Eine weitere mögliche Aufgabe ist, ein Handgerät für ein mobiles Elektrokleingerät und ein Verfahren zum Laden eines Energiespeichers eines mobilen Elektrokleingerätes zu schaffen, welche eine verbesserte Ladung eines Energiespeichers des Handgeräts erlauben, insbesondere, nachdem der Energiespeicher stark entladen wurde.

Eine weitere mögliche Aufgabe ist, ein Handgerät für ein mobiles Elektrokleingerät zu schaffen, welches kontaktlos ladbar ist und eine lange Lebensdauer aufweist. Eine weitere mögliche Aufgabe ist, ein Handgerät und/oder ein Ladegerät für ein mobiles Elektrokleingerät zu schaffen, welches einen konstruktiv einfachen Aufbau aufweist.

Mindestens einige dieser Aufgaben werden jeweils gemäss einem oder mehreren der nachfolgenden Erfindungsaspekte, wie in den Ansprüchen definiert, gelöst.

Die erwähnten Handgeräte oder Handteile sind insbesondere Geräte zur Zahn- oder Körperpflege, beispielsweise Zahnbürsten, Massagegeräte, Applikatoren, Rasierer, Hautreinigungsgeräte, etc.

Gemäss einem **ersten Aspekt der Erfindung** liegt ein Ladegerät zur kontaktlosen Übertragung elektrischer Energie zur Energieversorgung eines schnurlosen Handgeräts, insbesondere eines Handgerätes zur Körperpflege vor. Dabei weist das Ladegerät eine elektronische Schaltung zum Speisen eines induktiven Energieübertragers auf, und ist die Schaltung dazu eingerichtet, eine dem induktiven Energieübertrager zugeführte Energie nach Massgabe einer dem induktiven Energieübertrager entnommenen Energie anzupassen.

In einer Ausführungsform weist die Schaltung auf:
- eine Primärwicklung zum Speisen des Handgeräts, wobei die Primärwicklung Teil eines Schwingkreises ist,
- eine Speiseschaltung zum gepulsten Einspeisen von Energie in den Schwingkreis, wobei beispielsweise der Schwingkreis mit der Schwingfrequenz des Schwingkreises gepulst gespeist wird;
- eine Detektionswicklung, welche mit der Primärwicklung magnetisch gekoppelt ist; und
- eine Regelschaltung, welche die Spannung an der Detektionswicklung gleichrichtet und, wenn diese Spannung einen Schwellwert überschreitet, das gepulste Einspeisen durch die Speiseschaltung unterbricht oder dämpft.

Durch die Unterbrechung oder zeitweise Reduktion des Einspeisens wird der Energieverbrauch des Ladegeräts reduziert.

Die generelle Funktionsweise der Schaltung kann wie folgt sein: Ein Sperrwandler lädt in die Primärinduktivität der Primärwicklung ein Magnetfeld ein und speist damit beim Entladen eine Kapazität welche auf der Sekundärseite eines Transformators hinter einem Gleichrichter platziert ist. Auf diese Sekundärseite wird typischerweise der Hauptteil der Leistung übertragen. Eine entsprechende Sekundärwicklung muss eine gute magnetische Kopplung zur Primärwicklung aufweisen. Es kann eine Hilfswicklung oder Detektionswicklung vorliegen, welche einerseits eine Energieversorgung von Bauteilen der Schaltung erlaubt und andererseits als Detektor für die übertragene Leistung dient. Da die eingeladene Energie in den Transformator immer die gleiche ist wird bei aktiver Leistungsaufnahme der Sekundärwicklung im Mittel weniger Leistung zur Hilfswicklung übertragen. Diese Leistungsdifferenz kann zu Regelung verwendet werden. Es kann neben den Ladebetrieb auch zwei weitere Betriebs-Modi geben:
1. Laden des Akku im Handgerät, wozu typischerweise das Handgerät bezüglich des Ladegerätes in einer Ladeposition angeordnet ist. In der Ladeposition ist beispielsweise das Handgerät im Ladegerät eingesetzt oder auf das Ladegerät aufgesetzt oder gelegt;
2. Kein Laden des Akkus, wobei das Handgerät nicht in der Ladeposition bezüglich des Ladegerätes angeordnet ist;
3. Akku im Handgerät vollständig geladen und Handgerät in der Ladeposition bezüglich des Ladegerätes.

Diese Modi können durch die eben genannte Leistungsdifferenz erkannt werden. In den Modi 2 und 3 sinkt die aufgenommene Eingangsleistung stark ab. Die Modi 2 und 3 können elektrisch als ein Modus behandelt werden, insbesondere wenn im Handgerät kein Ferrit integriert ist und/oder bei der Erkennung des Modus 3 die Sekundärwicklung elektrisch von der Sekundärschaltung getrennt wird. Durch diese Trennung kann diese Spule kein magnetisch entgegengesetztes Feld aufbauen und ist somit magnetisch nicht aktiv. Wenn im Handgerät kein Ferrit integriert ist wird auch die Primär- und Hilfsinduktivität nicht durch die Präsenz oder Abwesenheit dieses Ferrits verändert.

In einer Ausführungsform sind die Speiseschaltung und die Regelschaltung aus diskreten Schaltelementen gebaut. Das Ladegerät weist also keine integrierten Schaltkreise auf. Dadurch ist ein kostengünstiger und einfacher Aufbau möglich.

In einer Ausführungsform weist die Regelschaltung auf: eine Gleichrichterschaltung zum Bilden einer gleichgerichteten Spannung aus der Spannung an der Detektionswicklung, und eine Unterbrecherschaltung, welche, wenn diese gleichgerichtete Spannung einen Schwellwert überschreitet, eine Ansteuerung eines Schaltelementes zur Speisung des Schwingkreises unterdrückt oder dämpft. Die Ansteuerung kann dabei vollständig unterdrückt werden, so dass der Schwingkreis entsprechend seiner Dämpfung abklingt. Die Ansteuerung kann auch nur teilweise unterdrückt werden, so dass der Schwingkreis mit kleinerer Amplitude und reduzierter Energieeinspeisung weiter schwingt.

In einer Ausführungsform hebt die Unterbrecherschaltung die Unterdrückung des Schaltelementes zur Speisung des Schwingkreises intermittierend auf und erhält dadurch die Schwingung des Schwingkreises aufrecht. Dies ist zweckmässig, wenn die Unterdrückung vollständig ist.

Indem der Schwingkreis weiter schwingt oder die Schwingung des Schwingkreises durch intermittierende Anregung aufrechterhalten wird ist stets ein minimales magnetisches Wechselfeld vorhanden. Gelangt wieder ein Verbraucher mit einer Sekundärwicklung in den Bereich des Wechselfeldes, so entnimmt er diesem Energie, und die Speisung des Schwingkreises wird wieder verstärkt.

Die Ausführungsform erlaubt den Einsatz unter einer grossen Bandbreite von Speisespannungen, beispielsweise zwischen 100 V und 250 V mit Frequenzen im Bereich von beispielsweise 45 Hz bis 65 Hz. Beispielsweise führt eine Erhöhung der Speisespannung zu einem schnelleren Aufschwingen des Schwingkreises, welche aber dank der Regelschaltung gleichwohl nicht zu einer Überversorgung des Schwingkreises führt.

In einer Ausführungsform weist die Unterbrecherschaltung einen zweiten Schalter auf, welcher derart angeordnet ist, dass wenn die gleichgerichtete Spannung der Detektionsschaltung einen Schwellwert überschreitet, das Potential an der Basis des Schaltelementes zur Speisung des Schwingkreises nach unten zieht. Damit ist eine schaltungstechnisch einfache Lösung realisierbar.

In einer Ausführungsform weist die Schaltung auf:
- eine Primärwicklung zum Speisen des Handgeräts, wobei die Primärwicklung Teil eines Schwingkreises ist,
- eine Treiberschaltung zum gepulsten Einspeisen von Energie in den Schwingkreis nach Massgabe eines Treibersignals,
- eine Strommessschaltung zum Erzeugen eines Strommesssignales entsprechenden eines in den Schwingkreis fliessenden Stroms,
- eine Regeleinrichtung, welche dazu eingerichtet ist, das Strommesssignal zu erfassen und nach Massgabe des Strommesssignals das Treibersignal zur Ansteuerung der Treiberschaltung als pulsbreitenmoduliertes Signal mit einer Frequenz entsprechend einer Resonanzfrequenz des Schwingkreises zu erzeugen.

In einer Ausführungsform ist die Regeleinrichtung dazu eingerichtet, sich in einem **Schlafzustand** oder in einem **Ladezustand** zu befinden, im **Schlafzustand** intermittierend während einer Testzeitdauer ein Treibersignal zu erzeugen und damit Energie in den Schwingkreis zu speisen, zu testen, ob dabei das Strommesssignal einen ersten Schwellwert überschreitet, und wenn dies der Fall ist, in den Ladezustand zu wechseln, und wenn dies nicht der Fall ist, im Schlafzustand zu verbleiben. Der Energieverbrauch wird entsprechend der Zeitdauer zwischen diesen intermittierenden Tests sowie der Testzeitdauer reduziert.

In einer Ausführungsform ist die Regeleinrichtung dazu eingerichtet, im **Ladezustand** im wesentlichen andauernd das Treibersignal zu erzeugen, zu testen, ob dabei das Strommesssignal einen zweiten Schwellwert unterschreitet, und wenn dies der Fall ist, in den Schlafzustand zu wechseln, und wenn dies nicht der Fall ist, im Ladezustand zu verbleiben. Der zweite Schwellwert kann gleich dem ersten Schwellwert sein. Vorteilhafterweise liegt aber eine gewisse Hysterese vor, d.h. dass der zweite Schwellwert tiefer als der erste ist.

In einer Ausführungsform weist die **Strommessschaltung** einen Messshunt und eine Gleichrichterschaltung zum Gleichrichten einer über dem Messshunt auftretenden Spannung und zum Erzeugen des Strommesssignals auf. Dabei kann die Regeleinrichtung durch einen Mikroprozessor oder Mikrocontroller realisiert sein. Optional weist der Mikroprozessor oder Mikrocontroller einen Analogeingang zum Erfassen des Strommesssignals auf. Zur Auswertung des Strommesssignales kann anstelle eines Analogeingangs auch ein Schwellwert an einem Analogausgang des Mikrocontrollers ausgegeben werden, und dessen Wert mittels eines Komparators mit dem Strommesssignal verglichen werden.

In einer Ausführungsform der Erfindung implementiert der Mikroprozessor oder Mikrocontroller eine Kommunikationsschnittstelle, insbesondere eine USB-Schnittstelle. Andererseits können über diese Schnittstelle Daten, die im Ladegerät erfasst wurden, und/oder Daten, die im oder mittels des Handgerätes erfasst wurden und an das Ladegerät übermittelt wurden an ein weiteres Gerät übertragen werden, welches auch die USB-Schnittstelle und deren Speisung bereitstellt. Wie im USB-Standard üblich, können auch Daten über den Leistungsbedarf und über die Präsenz des Ladegerätes an das weitere Gerät übermittelt werden. Durch die Speisung über eine USB-Schnittstelle ist eine weitgehende Unabhängigkeit von länderspezifischen Standards möglich, und ist der Einsatz von Geräten verschiedenster Hersteller zur Speisung der USB-Schnittstelle möglich.

In einer Ausführungsform der Erfindung ist das weitere Gerät, auch Versorgungsgerät genannt, dazu ausgebildet, einen Betriebszustand nach Massgabe des Leistungsbedarfs oder der Präsenz des Ladegerätes anzupassen. Beispielsweise kann das Versorgungsgerät eine Versorgungseinheit aufweisen, die entsprechend dem Leistungsbedarf oder der Präsenz des Ladegerätes in einem Speisezustand ist, in welchem das Versorgungsgerät Leistung an das Ladegerät abgibt, oder in einem Standby oder Schlafzustand, in welchem es keine Leistung an das Ladegerät abgibt.

Information über eine Präsenz oder einen Ladezustand eines Handgerätes kann sich somit vom Handgerät zum Ladegerät und vom Ladegerät zum Versorgungsgerät fortpflanzen. Damit kann gemäss einer Ausführungsform auch die Leistungsaufnahme des Versorgungsgerätes auf das Notwendige beschränkt werden.

Das Versorgungsgerät kann ein Netzteil sein, insbesondere ein Steckernetzteil, also ein mit einem Wandstecker integriertes Netzteil. Das Netzteil oder Versorgungsgerät kann einen USB-Anschluss zur Übertragung seiner Leistung an das Ladegerät und zur Übertragung von Information vom Ladegerät zum Versorgungsgerät aufweisen.

In einer anderen Ausführungsform wird eine USB- Schnittstelle nur zum Speisen des Gerätes benutzt, ohne dass eine Kommunikation gemäss dem USB-Standard stattfindet. Es kann auch nur eine Schnittstelle mit Kontaktelementen wie einem USB-Stecker oder einer USB-Buchse benutzt werden, ohne dass Schnittstellenfunktionen im Bereich der Kommunikation nach dem USB-Standard implementiert sind. Natürlich lässt sich auch eine andere Gleichspannungs (DC)-Versorgung anstelle einer solchen USB-Verbindung einsetzen.

Daten, die im **Ladegerät** erfasst werden sind beispielsweise Daten über die Benutzungshäufigkeit - beispielsweise unter der Annahme, dass das Handgerät bei Nichtbenutzung im Ladegerät angeordnet ist - und/oder über den Energieverbrauch und/oder über variierende Betriebsparameter, die einen Rückschluss auf den Zustand des Handgerätes zulassen (abnehmende Akkukapazität u. dgl.) oder auch Betriebsparameter die Rückschlüsse auf den Zustand der Aufsteckbürste zulassen.

Daten, die im **Handgerät** erfasst werden sind beispielsweise eines oder mehrere von:
- Anpressdruck oder andere Parameter eines Effektors, beispielsweise einer Zahnbürste:
- Anwendungszeit (Reinigungszeit);
- Anzahl Anwendungen in bestimmten Zeitintervallen;
- Ladezustand des Akkus des Handgerätes;
- kumulierte Anwendungszeit und daraus resultierend ein Hinweis, dass die Bürste gewechselt werden müsste
- ...

Eine dabei verwendete Kommunikation zwischen Handgerät und Ladegerät kann mittels Infrarot-Schnittstelle, über eine Anzeige-LED des Handgeräts, über Bluetooth, WLAN-Standard oder ein Nahfeldkommunikationsprotokoll, durch Ein- und Ausschalten der Sekundärwicklung im Handgerät, durch Modulation eines Stromes durch die Sekundärwicklung, insbesondere Frequenzmodulation, etc... geschehen.

Einzelne dieser Kommunikationswege eignen sich offensichtlich auch für die direkte Kommunikation mit dem weiteren Gerät, also ohne den Umweg über das Ladegerät. Beispielsweise kann das weitere Gerät ein Smartphone oder ein PDA oder Tabletcomputer oder ein anderer Computer sein.

Die Kommunikation kann entweder unidirektional nur vom Handgerät zum Ladegerät ausgestaltet sein, oder auch bidirektional d.h. in beide Richtungen ausgelegt sein.

Der Ladezustand des Akkus des Handgerätes kann als numerischer Wert über einen der genannten Kommunikationswege übermittelt werden. Er kann auch als binäres Signal übermittelt werden, indem im Handgerät bei voll geladenem Akku eine Verbindung zur Sekundärspule geöffnet wird. Dazu kann der Ladestromkreis also aufgetrennt werden, beispielsweise mit einem Halbleiterschalter oder Transistorschalter. Dadurch entfällt die entsprechende induktive Last im Magnetfeld, was im Ladegerät wie bereits beschrieben detektierbar ist.

In einer Ausführungsform weist das Ladegerät eine Anzeige eines Betriebszustandes des Handgerätes auf. Dieser Betriebszustand kann der Ladezustand des Akkus des Handgerätes sein (beispielsweise "Akku geladen", "Akku wird geladen", der Ladezustand in Prozent, Anzeige eines niedrigen Ladezustands, ...) und/oder ein Funktionsstatus des Handgerätes ("im Standby", "am Laden"). Damit wird die Bedienbarkeit des Handgeräts verbessert.

Die Anzeige kann beispielsweise durch verschiedene LEDs, farbige LEDs, ein Display etc. geschehen. Insbesondere LEDs oder farbige LEDs oder andere Leuchtmittel können durch einen transluzenten Boden des Ladegerätes scheinen.

Der angezeigte Betriebszustand kann durch einen der genannten Kommunikationswege übermittelt werden, oder anhand einer Leistungsaufnahme des Handgerätes bestimmt werden.

In einer Ausführungsform wird die Anzeige des Betriebszustands und/oder eine andere Anzeige am Ladegerät nur dann aktiviert, wenn ein Präsenzdetektor eine Präsenz eines Benutzers anzeigt. Ein Präsenzdetektor ist beispielsweise ein Bewegungsmelder, ein pyroelektrischer Sensor, ein Erschütterungssensor, ein Mikrofon, etc...

Eine solche andere Anzeige kann beispielsweise eine Anzeige sein, welche einem Benutzer signalisiert, dass eine bestimmte Zeitdauer vergangen ist und/oder dass seine Zähne geputzt werden sollen.

In einer Ausführungsform weist das Ladegerät eine Versorgungssicherungsschaltung auf, welche die Spannung an einem Verbindungspunkt zu einer Referenzspannung zieht, wobei der Verbindungspunkt mit einer Kommunikationsleitung einer Schnittstelle zu einem Versorgungsgerät oder speisenden Gerät verbunden ist, und das Ladegerät dazu ausgebildet ist, eine Spannung am Verbindungspunkt zu messen und nach Massgabe der gemessenen Spannung einen Ladevorgang durch das Ladegerät zu modifizieren. Dieses Modifizieren kann beispielsweise beinhalten, dass ein Ladevorgang mit voller Leistung, reduzierter Leistung oder gar nicht durchgeführt wird. Die Kommunikationsleitung kann eine Datenleitung einer USB-Schnittstelle sein, beispielsweise also eine Leitung an einem Kontakt einer Buchse oder eines Steckers gemäss dem USB-Standard, welche zur Datenübertragung vorgesehen ist. Ist die Spannung an dieser Leitung im wesentlichen gleich der Referenzspannung, so kann daraus geschlossen werden, dass ein angeschlossenes Versorgungsgerät gemäss dem USB-Standard kommunizieren kann. Weiter kann daraus geschlossen werden, dass ein solches Versorgungsgerät nur begrenzt Leistung liefern kann und somit durch das Ladegerät nur begrenzt oder gar nicht belastet werden soll. Dadurch wird das Versorgungsgerät vor Überbelastung geschützt. Die beschriebene Versorgungssicherungsschaltung kann völlig unabhängig von den anderen Aspekten und Ausführungsformen allgemein für Geräte eingesetzt werden, von denen erwartet werden kann, dass sie mit einem USB-Anschluss eines Computers verbunden werden.

Das Ladegerät kann eine Ladestation sein, auf oder in welche das Handgerät eingesetzt wird. Das Ladegerät kann dabei eine Ladeeinheit sein, welches in Kombination mit einem anderen Gebrauchsgegenstand wie beispielsweise einem Wasserglas oder Zahnglas eingesetzt wird, oder eine Ladefläche, auf welche das Handgerät alleine oder zusammen mit anderen Handgeräten gelegt wird.

Eine Vielzahl von den hier vorgestellten Verfahren und Vorrichtungen kann auch in einem Zusammenhang ohne Bezug zu induktiven Ladegeräten realisiert werden.

Gemäss einem **zweiten Aspekt der Erfindung** liegt ein Handgerät mit kontaktloser Energieversorgung vor, welches aufweist:
- eine Sekundärwicklung zur induktiven Energieübertragung von einem Ladegerät an das Handgerät,
- einen über die Sekundärwicklung aufladbaren elektrischen Energiespeicher,
- einen Verbraucher und
- eine Schalteinrichtung zum Ein- und Ausschalten der Versorgung des Verbrauchers durch den Energiespeicher.
Das Handgerät weist ferner eine Schutzschaltung auf, welche die Versorgung des Verbrauchers unterbricht, wenn Energie über die Sekundärwicklung in das Handgerät gespeist wird. Damit wird also die Last von der Versorgung getrennt. Damit wird verhindert, dass ein versehentlich noch eingeschaltetes Handgerät (mit schwachem Akku) in ein Ladegerät eingesetzt wird, und der im eingesetzten Zustand im Handgerät fliessende Ladestrom durch den Verbraucher fliesst. In der Regel ist der Ladestrom kleiner als der Strom, der normalerweise zum Betrieb des Verbrauchers erforderlich ist. Bei einem entladenen Akku würde dabei, obwohl der Verbraucher eingeschaltet ist, der Verbraucher nicht erkennbar funktionieren, und würde nach dem Einsetzen in das Ladegerät den Ladestrom aufnehmen, ohne beispielsweise erkennbar zu vibrieren. Dadurch wiederum würde der Akku nie aufgeladen. Durch die beschriebene automatische Abschaltung des Verbrauchers respektive die Unterbrechung einer Versorgung des Verbrauchers sobald detektiert wird, dass eine Speisung stattfindet, wird dieser Fehler verhindert.

Diese Art von Handgerät lässt sich mit den oben beschriebenen verschiedenen Ausführungsformen von Ladegeräten gemäss dem ersten Aspekt der Erfindung beliebig kombinieren.

In einer Ausführungsform weist das Handgerät eine Schalteinrichtung zum Ein- und Ausschalten der Sekundärwicklung auf. Beispielsweise kann das Ausschalten ausgelöst werden, wenn der Akku voll ist. Zusätzlich oder alternativ kann durch Ein- und Ausschalten Information an das Ladegerät übermittelt werden, also eine Kommunikation mit dem Ladegerät realisiert werden.

In einer Ausführungsform weist das Handgerät eine Strommessvorrichtung auf, welche einen Ladestrom in einem Ladestromkreis des Handgeräts erfasst. Die Schutzschaltung unterbricht die Versorgung des Verbrauchers, wenn der Ladestrom eine Schwelle überschreitet. Der Ladestromkreis ist im Wesentlichen durch die Sekundärwicklung, eines oder mehrere Gleichrichterelemente und den Akku gebildet.

Gemäss einer Ausführungsform weist die Strommessvorrichtung einen Messgleichrichter auf, der eine Spannung über einem Messelement im Ladestromkreis gleichrichtet und an einem Messkondensator eine gleichgerichtete Spannung bildet. Die Schutzschaltung unterbricht die Versorgung des Verbrauchers, wenn diese gleichgerichtete Spannung eine Schwelle überschreitet. Damit ist eine konstruktiv einfache Realisierung mit diskreten Bauelementen möglich. Das Messelement kann die Gleichrichterdiode des Ladestromkreises selber sein. Das Messelement kann auch ein Widerstand als Messshunt sein.

In einer Ausführungsform der Erfindung weist das Handgerät einen mechanischen Schalter auf, welcher zum Einschalten der Versorgung des Verbrauchers einen Steuereingang der Schalteinrichtung auf ein erstes Potential zieht. Die Schutzschaltung zieht beim Auftreten eines Ladestromes den Steuereingang auf ein zweites Potential und schaltet dadurch die Versorgung aus. Damit ist eine besonders einfache und rein diskrete Schaltung realisiert, welche die Verwendung eines mechanischen Ein/Aus-Schalters am Handgerät zulässt.

In einer Ausführungsform weist das Handgerät einen integrierten Schaltkreis mit einem Messeingang auf, wobei der integrierte Schaltkreis dazu eingerichtet ist, den Verbraucher auszuschalten, falls eine Spannung um Messeingang einen ersten Schwellwert überschreitet. Damit ist das genannte Prinzip der Erkennung einer Speisung und der automatischen Lastabschaltung auch in Verbindung mit einem Mikrocontroller realisierbar.

In einer Ausführungsform ist der integrierte Schaltkreis dazu eingerichtet, die Spannung am Messeingang als Akkuspannung zu verarbeiten, wenn sie einen zweiten Schwellwert unterschreitet. Die Schaltung interpretiert dann also diese Spannung als Akkuspannung, und löst je nach Höhe der Akkuspannung entsprechende Signale oder Schritte aus. Beispielsweise kann die Schaltung über Anzeigemittel nach Massgabe der Akkuspannung einen Ladezustand des elektrischen Energiespeichers einem Benutzer anzuzeigen. Alternativ oder zusätzlich kann sie den Ladezustand über ein Kommunikationsmittel, beispielsweise wie bereits oben genannt, dem Ladegerät und/oder einem weiteren Gerät übermitteln.

Der zweite Schwellwert kann unter dem ersten Schwellwert liegen. Der zweite Schwellwert ist in der Regel aber gleich dem ersten Schwellwert.

Damit ist es möglich, einen einzigen Eingang des integrierten Schaltkreises die Messungen für diese beiden Funktionen "Batterieladezustand" und "Erkennung einer Speisung und Lastabschaltung" zu realisieren.

In einer Ausführungsform weist das Handgerät einen Batteriespannnungsmesswiderstand auf welcher die Spannung am Messkondensator zur Akkuspannung zieht. Damit wird, wenn kein Ladestrom fliesst respektive der Ladestromkreis nicht gespeist ist, die Spannung am Messeingang gleich der Akkuspannung.

Gemäss einem **dritten Aspekt der Erfindung** liegt ein Handgerät mit kontaktloser Energieversorgung vor, welches eine Sekundärwicklung zur induktiven Energieübertragung von einem Ladegerät an das Handgerät und Akku aufweist. Der Akku ist über die Sekundärwicklung aufladbar. Dabei ist die Sekundärwicklung auf einem Handgerät-Spulenkörper angeordnet. Es weist der Handgerät-Spulenkörper einen einstückig angeformten Stützabschnitt auf. Der Stützabschnitt ist elastisch verformbar. Im betriebsbereiten Zustand des Handgerätes drückt der Handgerät-Spulenkörper mit seinem Stützabschnitt gegen den Akku. Beispielsweise drückt er mit einer Kraft im wesentlichen in Längsrichtung des Handgerätes. Dadurch realisiert er eine federnde Fixierung des Akkus. Damit entfällt der Bedarf nach einer Andrückfeder oder nach anderen elastischen Elementen zur sicheren Kontaktierung des Akkus. Toleranzen in der Herstellung von Gehäuse, Akku und weiteren Elementen werden durch die Nachgiebigkeit des Stützabschnittes ausgeglichen. Die Konstruktion und Montage des Handgerätes werden vereinfacht.

Die verschiedenen bereits beschriebenen Aspekte der Erfindung können jeweils miteinander kombiniert werden. Sie können auch mit den nachfolgend beschriebenen Ausführungsformen kombiniert werden.

Gemäss einer Ausführungsform weist das Handgerät-Gehäuse zwei Schalen aus Kunststoff auf, welche miteinander mittels Ultraschallschweissen verbunden sind. Eine Schweissnaht kann sich dazu im wesentlichen entlang einer Längsrichtung des Handgeräts erstrecken. Bei der Herstellung des Handgeräts werden eine Elektronik und die Ladespule des Handgeräts, sowie auch ein Motor des Handgeräts (optional mit einem Exzenter zur Erzeugung von Vibrationen) in einem Kopfteil des Handgeräts jeweils auf einer der beiden Schale montiert (eingeklickt, geschnappt, etc.). Die zweite Schale wird auf die erste gelegt und wird mittels Ultraschall verschweisst. Dies ist im Unterschied zu einem Handgerät wie einer Zahnbürste, bei der das ganze Innenleben in ein rohrartiges Handgerät-Gehäuse eingeschoben wird, und dann das Handgerät-Gehäuse mit dem Deckel verschlossen wird.

Gemäss einer Ausführungsform bildet das Ladegerät mit einer Ausformung am Ladegerät-Gehäuse einen Schacht zur Halterung des Handgerät. Das Handgerät steht dabei im Ladegerät in einer Position, in welcher es ohne Halterung im Schacht des Ladegeräts nicht stehen könnte. Das Handgerät weist also keine Bodenfläche auf, auf welcher es stabil stehen könnte. Anstelle eines Zapfens, der am Ladegerät-Gehäuse ausgeformt ist und in eine korrespondierende Öffnung des Handgerät-Gehäuses einfährt, ist das Handgerät gemäss dieser Ausführungsform als ganzes im Schacht des Ladegerät-Gehäuses gehalten.

Gemäss einer Ausführungsform weisen die Spulen mit der Sekundärwicklung jeweils eine Achse auf, die im wesentlichen normal zu einer Längsachse des Handgeräts insbesondere normal zu einer Längsachse eines Greifabschnittes des Handgerätes verläuft. Die Achse einer Wicklung ist jene geometrische Achse, um welche die Wicklungen gewickelt sind. Der Greifabschnittes ist ein Abschnitt, der zum Greifen und Halten des Handgeräts von Hand durch einen Benutzer vorgesehen ist. Diese Ausrichtung der Spulenachse ist im Gegensatz zu Ausführungsformen, in welchen die Achsen der Sekundärwicklung parallel zu der Längsachse sind oder mit dieser zusammenfallen. Dann ist zweckmässig, dass das Handgerät nur in einer Richtung oder Orientierung in das Ladegerät gesetzt werden kann, da ansonsten keine korrekte Ladung stattfindet.

Gemäss einer Ausführungsform verlaufen Achsen der Primärwicklungen und Sekundärwicklungen im wesentlichen horizontal, angenommen, dass das Ladegerät entsprechend dem bestimmungsgemässen Gebrauch des Gerätes auf einer ebenen Fläche platziert ist. Dabei können ein oder mehrere Primärwicklungen wie auch Sekundärwicklungen seitlich des Handgeräts respektive dessen Greifabschnittes angeordnet sein.

Gemäss einer Ausführungsform sind Sekundärwicklungen auf einer Rückseite des Handgeräts angeordnet und sind die eine oder mehreren Primärwicklungen an korrespondierender Stelle im Ladeteil platziert. Die Rückseite ist in der Regel diejenige Seite, die einem Effektor des Handgeräts gegenüber liegt. Der Effektor kann eine Bürste, ein Massageelement, ein Applikator, eine Schneidvorrichtung etc. sein. Damit ist eine niedrige Bauweise des Ladeteils möglich, und es kann die Primärwicklung direkt auf einer Printplatte des Ladegerätes angeordnet sein.

Gemäss einer Ausführungsform ist die Sekundärwicklung an einem gemeinsamen Trageelement, im folgenden Akkuhalter genannt, angebracht und nicht an Schalen des Handgerät-Gehäuses. Der Akkuhalter kann dabei eine Baugruppe für Akku, Elektronik und Spule bilden. Der Akkuhalter kann selber als Printplatte ausgebildet sein. Der Motor kann über Kabel an der Akkuhalter respektive die Printplatte angeschlossen sein. Die Positionierung der Sekundärwicklung innerhalb des Handgeräts kann dann über den Akkuhalter erfolgen. Dieser wiederum kann innerhalb der Schalen an vorzugsweise einstückigen Ausformungen der Schalen des Handgerät-Gehäuses ausgerichtet, damit die Spulen des Ladegeräts und des Handgeräts möglichst gut aufeinander ausgerichtet sind. Damit ist eine Vormontage des Akkuhalters samt Motor möglich.

Gemäss einer Ausführungsform ist dabei die Spule auf dem Akkuhalter mittels klemmenden, einrastenden oder einschnappenden Elementen gehalten. Damit ist eine einfache Montage möglich. Zusätzlich oder alternativ kann die Sekundärwicklung auch auf den Akkuhalter geklebt sein oder mit einem Klebestreifen befestigt sein.

Gemäss einer Ausführungsform ist der Akkuhalter Träger für verschiedene elektrische und/oder elektronische und/oder mechanische Teile. Der Akkuträger kann so gestaltet sein, dass verschiedene Typen von Schaltern, mit unterschiedlichen Bauhöhen, auf ihm angeordnete respektive montiert und verwendet werden können. LEDs könnten ebenfalls im Print integriert werden und der Akkuträger ist für ein Durchscheinen der LEDs auf die Schalen des Gehäuses nicht im Weg.

In einer Ausführungsform der Erfindung ist der Akku oder sind mehrere Akkus jeweils auf dem Akkuträger mit entsprechenden Halteeelementen mit einer einrastenden oder klemmenden Halterung gehalten, also beispielsweise eingeschnappt oder eingeklickt. Die Halteelemente schützen beispielsweise vor einem Herausfallen bei seitlichen Schlägen. Anschlussskontakte und/oder Anschläge in Längsrichtung des oder der Akkus können an den beiden Enden des Akkus (vorne und hinten) realisiert sein und schützen vor Schlägen in der Längsrichtung.

Gemäss einer Ausführungsform wirt mittels einer geometrischen Gestaltung der Geometrie von Ladegerät-Gehäuse und Handgerät-Gehäuse erreicht, dass das Handgerät nur in einer einzigen Position ins Ladegerät gestellt werden kann. Dies verhindert bei gewissen Varianten der Erfindung, dass das Handgerät beispielsweise um 180° verdreht in das Ladegerät eingesetzt werden wird und dann nicht geladen werden kann.. Dabei wird insbesondere darauf geachtet, dass die beiden Spulen möglichst nahe beieinander liegen - d.h. vorstehende und distanzschaffende Mittel sind auf der der Spule entgegengesetzten Seite angeordnet.

Weitere Aspekte, die insbesondere die Fixierung und Montage von inneren Komponenten im Gehäuse des Handgeräts betreffen, werden nachfolgend beschrieben. Das Handgerät ist meist mehrteilig aufgebaut, im vorliegenden Fall können eine vordere wie auch eine hintere Schale vorliegen, die nach der Montage der inneren Komponenten zusammengefügt und verbunden werden, beispielsweise durch Schweissen, Kleben oder auch durch mechanisches Einrasten.

Der Akkuträger kann Träger verschiedener elektrischer, elektronischer und allenfalls mechanischer Komponenten sein. Er kann ein Kunststoffteil aus einem Hartkunststoff wie Polyoxymethylen (POM) oder Polypropylen (PP) sein. Auf dem Akkuträger sind beispielsweise folgende Komponenten angebracht:
- Printplatte
- Akku
- Spule
- Elektrische Verbindungen

Der Akkuträger kann geometrisch so ausgestaltet sein, dass er fest und in einer eindeutigen Position im Handgerät angeordnet ist. Dazu können verschiedene Mittel ausgebildet sein, die alleine oder kombiniert vorliegen können:
- Zentriermittel: Sie sind ausgebildet, dass der Akkuträger eine eindeutige Lage bezüglich zweier Achsen erhält. Dazu sind beispielsweise am Gehäuse zylindrische Vorsprünge ausgebildet und am Akkuträger sind Ausnehmungen in der gegengleichen Form geformt. Sowohl an den Teilen am Akkuträger wie auch am Gehäuse können Einfahrhilfen wie beispielsweise Einlaufschrägen realisiert sein, damit die Montage einfacher vonstatten geht. Zur optimalen Positionierung können zwei Zentriermittel realisiert sein.
- Abstandhalter: Sie sind als vorstehende Elemente entweder am Akkuträger oder am Gehäuse realisiert. Sie begrenzen die Bewegung, die aufgrund der Zentriermittel noch möglich ist, in einer weiteren Dimension. Sinngemäss sind sie als Anschlagmittel ausgebildet. Vorzugsweise sind in einem typischen Handgerät der Körperpflege drei bis zehn Abstandhalter ausgebildet.
- Schnappmittel: Sind wiederum am Gehäuse oder am Akkuträger ausgebildet und sorgen dafür, dass die vom Abstandhalter definierte Position gehalten wird. Ist die Position erreicht, wird eingeschnappt. Die Schnappung kann reversibel oder irreversibel sein. Insgesamt werden beispielsweise drei bis acht Schnappmittel genutzt.

In der Regel wirken die drei Mittel zusammen. Bei der Montage wird über die Zentriermittel der Akkuträger an das Gehäuse herangefahren bis der Akkuträger am Abstandhalter ansteht, anschliessend wirken die Schnappmittel. Der Akkuträger ist somit fest und definiert positioniert.

Der Akkuträger kann weitere spezifische Eigenschaften aufweisen:
- Spulenhalter: Dieser kann als Teil des Akkuträgers geformt sein, d.h. die Spule wird auf den Akkuträger aufgebracht. Der Spulenhalter auf dem Akkuträger ist mit einer insbesondere leichten Federung ausgestaltet, sodass er, wenn das Handgerät verschlossen wird oder wenn der Akkuträger im Handgerät montiert wird, an der Aussenwand ansteht. Dadurch wird erreicht, dass die Spule aufgrund der allenfalls im Betrieb des Handgeräts entstehenden Vibrationen nicht in ein Wechselspiel zwischen Berühren und nicht Berühren der Aussenwand kommt, was zu akustisch störenden Geräuschen führen würde.
- Schalterdrückhilfsmittel: Der Schalter oder Taster für das Ein- und Ausschalten des Handgeräts kann von ausserhalb des Gehäuses durch Druck auf eine weichelastische Membrane betätigt werden. Da dieser Druck von der Position her nicht immer eindeutig definiert ist und Schalter sehr genaue Wirkungen benötigen, kann am Akkuträger das Schalterdrückhilfsmittel geformt sein. Dadurch wird bei einem Druck auf die weichelastische Membrane das Schalterdrückhilfsmittel betätigt, welches anschliessend sehr genau auf den Schalter drückt. Das Schalterdrückhilfsmittel kann dabei als vorstehendes Kunststoffteil ausgestaltet sein - insbesondere als Arm, welcher federnd beweglich ist und eine Ruhelage etwas über dem Schalter hat. Durch die Ausformung als Arm kann der Druck durch die Membrane auf irgend eine Stelle des Arms (innerhalb von Grenzen) wirken, und es wird dennoch der Druck positionsgenau auf den Schalter oder Taster übertragen.
In einer Ausführungsform sind ein Motor und ein durch diesen angetriebener Exzenter wie folgt angeordnet: Der Motor ist durch die Geometrie der Schalen des Handgerät-Gehäuses in der richtigen Position gehalten respektive fixiert. Er kann sich dabei in einem vorgegebenen Rahmen bewegen, so dass Vibrationen nicht direkt an das Handgerät-Gehäuse übertragen werden. Dabei sind beispielsweise an einer hinteren (einem Effektor gegenüber liegende) Schale Anschläge geformt, die ein zu starkes Auslenken aus einer Ruheposition verhindern. Der Motor ist im wesentlichen oder ganz in einem rohrartigen Element oder Rohr angeordnet, welches direkt mit der Schale verbunden ist und die Übertragung von Schwingungen auf einen Effektor oder Applikatorkopf ermöglicht und gleichzeitig das Vibrieren des Handteils minimiert. Dieses Rohr wiederum kann flexibel gelagert sein.

Gemäss einem **vierten Aspekt der Erfindung** liegt ein Handgerät mit kontaktloser Energieversorgung vor, welches aufweist: eine Steuereinheit, einen Akku. eine Batteriespannungsmessung zum Messen einer Akkuspannung, eine Detektionsschaltung zum Detektieren, ob das Handgerät durch ein Ladeteil mit Energie versorgbar ist, und eine Trennschaltung, womit ein Laden des Akkus unterbrechbar ist, wobei die Steuereinheit dazu eingerichtet ist,
- falls die Batteriespannung einen Mindestwert unterschritten hat, beispielsweise indem eine Mindestspannung zum Betrieb der Steuereinheit unterschritten wurde, das Laden des Akkus ungeachtet der Akkuspannung während einer vorgegebenen Mindestladezeit durchzuführen.

Es wird dadurch - im Vergleich zu einer Schaltung, die nur die Batteriespannung misst und bei Erreichen eines Schwellwertes den Ladevorgang unterbricht - dass der Ladevorgang zu früh beendet wird. Dies kann beispielsweise aufgrund eines hohen Innenwiderstandes des nur schwach geladenen Akkus geschehen.

Eine Ladezeit wird dabei insbesondere nur während Zeitfenstern hochgezählt, in denen das Laden des Akkus stattfindet.

Im entsprechenden Verfahren zum Laden eines Energiespeichers oder Akkus eines mobilen Elektrokleingerätes wird also, falls die Akkuspannung des Energiespeichers einen Mindestwert unterschritten hat, das Laden des Energiespeichers ungeachtet der Akkuspannung während einer vorgegebenen Mindestladezeit durchgeführt.

In einer Ausführungsform des vierten Aspektes ist die Steuereinheit dazu eingerichtet,
- falls das Laden des Akkus vor Erreichen der Mindestladezeit unterbrochen wird, und anschliessend das Handgerät wieder durch das Ladeteil mit Energie versorgbar ist, das Laden des Akkus wieder aufzunehmen, bis die Mindestladezeit erreicht ist.

In einer Ausführungsform des vierten Aspektes ist die Steuereinheit dazu eingerichtet,
- nachdem die Mindestladezeit erreicht worden ist und das Handgerät weiterhin durch das Ladeteil mit Energie versorgbar ist, das Laden des Akkus wieder aufzunehmen, falls die Akkuspannung einen unteren Schwellwert unterschreitet.

In einer Ausführungsform des vierten Aspektes ist die Steuereinheit dazu eingerichtet,
- das Laden des Akkus wieder zu unterbrechen, falls die Akkuspannung einen oberen Schwellwert überschreitet.

Gemäss einem **fünften Aspekt der Erfindung** liegt ein Handgerät mit kontaktloser Energieversorgung vor, welches aufweist:
- eine **Sekundärwicklung** zur induktiven Energieübertragung von einem Ladegerät an das Handgerät, einen über die Sekundärwicklung aufladbaren elektrischen **Energiespeicher**, einen **Verbraucher** und eine Schalteinrichtung zum Ein- und Ausschalten der Versorgung des Verbrauchers durch den Energiespeicher,
- ein **Handgerät-Gehäuse** mit einem entfernbaren **Verschlussteil**, insbesondere einem Boden, wobei bei entferntem Verschlussteil der Energiespeicher auswechselbar ist, und
- wobei die Sekundärwicklung am entfernbaren Verschlussteil angeordnet ist.

Damit ist es möglich, den Energiespeicher auszuwechseln, beispielsweise wenn ein Akku seine Lebensdauer erreicht hat und ersetzt werden muss. Damit kann die Lebensdauer des Handgeräts verlängert werden. Die Sekundärwicklung ist beispielsweise mit dem Verschlussteil fest verbunden und zusammen mit dem Verschlussteil vom übrigen Handgerät-Gehäuse entfernbar.

In einer ersten Ausführungsform des fünften Aspektes ist ein Ferritkern am entfernbaren Verschlussteil angeordnet, insbesondere konzentrisch zur Sekundärwicklung, beispielsweise als zylindrischer Kern oder als Topfkern.

In einer zweiten Ausführungsform des fünften Aspektes, welche mit einer der vorangehenden Ausführungsformen kombiniert sein kann, weist das Handgerät-Gehäuse auf: **Kontaktelementepaare** zum Herstellen einer lösbaren elektrischen Verbindung zwischen der Sekundärwicklung und einer von der Sekundärwicklung gespeisten **Sekundärschaltung**, welche im übrigen Handgerät-Gehäuse angeordnet ist. Insbesondere können zwei solcher Kontaktelementepaare vorliegen.

Damit ist es möglich, die Sekundärwicklung insbesondere zweipolig von der Sekundärschaltung zu trennen und das Verschlussteil vollständig vom übrigen Handgerät-Gehäuse zu entfernen. Alternativ zu einer solchen lösbaren elektrischen Verbindung kann eine Kabelverbindung zwischen dem Verschlussteil und dem übrigen Handgerät-Gehäuse vorliegen.

In einer dritten Ausführungsform des fünften Aspektes, welche mit einer der vorangehenden Ausführungsformen kombiniert sein kann, weist das Verschlussteil mindestens ein **Speicher-Kontaktierungselement** zum Kontaktieren eines elektrischen Anschlusses eines im Handgerät eingesetzten Energiespeichers auf. Dabei kann das Handgerät-Gehäuse ein **drittes Kontaktelementepaar** zum Herstellen einer lösbaren elektrischen Verbindung zwischen dem genannten Speicher-Kontaktierungselement und der Sekundärschaltung aufweisen,

In einer vierten Ausführungsform des fünften Aspektes, welche mit einer der vorangehenden Ausführungsformen kombiniert sein kann, ist das Verschlussteil mit einem **Bajonettverschluss** lösbar mit dem übrigen Handgerät-Gehäuse verbunden. Alternativ kann das Verschlussteil mit einer **Schraubverbindung** oder mit mehreren Schrauben lösbar mit dem übrigen Handgerät-Gehäuse verbunden sein. Alternativ kann das Verschlussteil mit einer **einrastenden und wieder lösbaren Steckverbindung** mit dem übrigen Handgerät-Gehäuse verbunden sein.

In einer fünften Ausführungsform des fünften Aspektes, welche mit einer der vorangehenden Ausführungsformen kombiniert sein kann, ist das Verschlussteil mittels eines Bajonettverschlusses lösbar mit dem übrigen Handgerät-Gehäuse verbunden und sind Elemente, welche mechanisch zur Funktion des Bajonettverschlusses beitragen, auch als elektrische Kontaktelemente ausgebildet.

In einer sechsten Ausführungsform des fünften Aspektes, welche mit einer der vorangehenden Ausführungsformen kombiniert sein kann, liegt am Verschlussteil und/oder am übrigen Handgerät-Gehäuse ein **federndes Element zum Erzeugen einer mechanischen Vorspannung** zwischen Speicher-Kontaktierungselementen und elektrischen Anschlüssen eines im Handgerät eingesetzten Energiespeichers zur elektrischen Kontaktierung dieser elektrischen Anschlüsse vor.

Gemäss einem **sechsten Aspekt der Erfindung** liegt ein Handgerät mit kontaktloser Energieversorgung vor, welches aufweist:
- eine **Sekundärwicklung** zur induktiven Energieübertragung von einem Ladegerät an das Handgerät, einen über die Sekundärwicklung aufladbaren elektrischen **Energiespeicher**, einen **Verbraucher** und eine Schalteinrichtung zum Ein- und Ausschalten der Versorgung des Verbrauchers durch den Energiespeicher,
- ein **Handgerät-Gehäuse** mit einem entfernbaren **Verschlussteil**, insbesondere einem Boden, wobei bei entferntem Verschlussteil der Energiespeicher auswechselbar ist, und
- wobei die Sekundärwicklung im Handgerät-Gehäuse angeordnet ist.

Damit ist es möglich, den Energiespeicher auszuwechseln, beispielsweise wenn ein Akku seine Lebensdauer erreicht hat und ersetzt werden muss. Damit kann die Lebensdauer des Handgeräts verlängert werden. Die Sekundärwicklung ist in einer speziellen Ausgestaltung direkt mit den weiteren Elementen verbunden.

In einer ersten Ausführungsform des sechsten Aspektes ist ein Ferritkern am entfernbaren Verschlussteil angeordnet, insbesondere konzentrisch zur Sekundärwicklung, beispielsweise als zylindrischer Kern oder als Topfkern.

In einer zweiten Ausführungsform des sechsten Aspektes, welche mit einer der vorangehenden Ausführungsformen kombiniert sein kann, weist das Verschlussteil ein **Speicher-Kontaktierungselement** zum Kontaktieren eines elektrischen Anschlusses eines im Handgerät eingesetzten Energiespeichers auf. Dabei kann das Handgerät-Gehäuse ein **Kontaktelementepaar** zum Herstellen einer lösbaren elektrischen Verbindung zwischen dem genannten Speicher-Kontaktierungselement und der Sekundärschaltung aufweisen,

In einer dritten Ausführungsform des sechsten Aspektes, welche mit einer oder beiden der vorangehenden Ausführungsformen kombiniert sein kann, ist das Verschlussteil mit einem **Bajonettverschluss** lösbar mit dem übrigen Handgerät-Gehäuse verbunden. Alternativ kann das Verschlussteil mit einer **Schraubverbindung** oder mit mehreren Schrauben lösbar mit dem übrigen Handgerät-Gehäuse verbunden sein. Alternativ kann das Verschlussteil mit einer **einrastenden und wieder lösbaren Steckverbindung** mit dem übrigen Handgerät-Gehäuse verbunden sein.

In einer vierten Ausführungsform des sechsten Aspektes, welche mit einer der vorangehenden Ausführungsformen kombiniert sein kann, ist das Verschlussteil mittels eines Bajonettverschlusses lösbar mit dem übrigen Handgerät-Gehäuse verbunden und sind Elemente, welche mechanisch zur Funktion des Bajonettverschlusses beitragen, auch als elektrische Kontaktelemente ausgebildet.

In einer fünften Ausführungsform des sechsten Aspektes, welche mit einer der vorangehenden Ausführungsformen kombiniert sein kann, liegt am Verschlussteil und/oder am übrigen Handgerät-Gehäuse ein **federndes Element zum Erzeugen einer mechanischen Vorspannung** zwischen Speicher-Kontaktierungselementen und elektrischen Anschlüssen eines im Handgerät eingesetzten Energiespeichers zur elektrischen Kontaktierung dieser elektrischen Anschlüsse vor.

Weitere bevorzugte Ausführungsformen gehen aus den abhängigen Patentansprüchen hervor.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Schaltung für ein Ladegerät;
- Figuren 2a-e: zeitliche Verläufe von Grössen im Betrieb der Schaltung aus Figur 1;
- Figuren 3-4a: weitere Schaltungen für ein Ladegerät;
- Figuren 5-6: Schaltungen für ein Handgerät;
- Figuren 7-9: Ansichten eines Ladegeräts mit eingesetztem Handgerät;
- Figur 10: einen horizontalen Querschnitt durch ein Ladegerät mit eingesetztem Handgerät im Fussbereich des Handgeräts;
- Figur 11: einen entsprechenden vertikalen Querschnitt;
- Figur 12: eine perspektivische Ansicht eines Ladegeräts;
- Figuren 13-14: Ansichten eines Bodens eines Handgeräts;
- Figuren 15-18: Ansichten und Schnitte von weiteren Handgeräten;
- Figur 19: eine weitere Schaltung für ein Ladegerät;
- Figur 20: eine weitere Schaltung für ein Handgerät; und
- Figur 21a-21b: ein Flussdiagramm für ein Verfahren zum Energiemanagement.

Gleiche oder gleich wirkende Elemente sind in den Figuren mit denselben Bezugszeichen bezeichnet. Die beschriebenen Ausführungsbeispiele stehen beispielhaft für den Erfindungsgegenstand und haben keine beschränkende Wirkung.

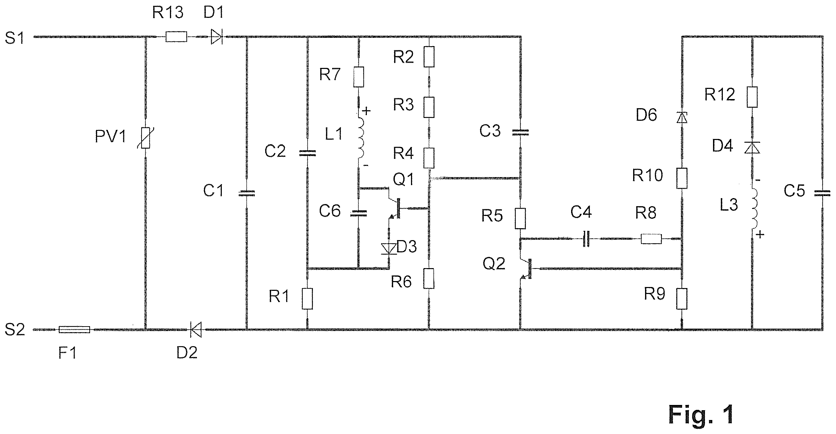

**Figur 1** zeigt eine erste Schaltungsvariante. Die Schaltung umfasst einen Schwingkreis L1, C6 mit Primärwicklung L1 zur Übertragung einer Leistung an ein hier nicht gezeichnetes Handgerät oder Handteil und ferner eine magnetisch der Primärwicklung L1 gekoppelten Detektionswicklung L3 in einem Feedbackkreis zum Erkennen einer Last. Durch den Feedbackkreis wird sichergestellt, dass bei Fehlen einer Last im Magnetkreis in Form eines Elektrokleingerätes die aufgenommene Leistung reduziert wird und das Gerät in einen Standby Modus versetzt wird, was die Leistungsaufnahme verringert.

Die Schaltung kann mit Wechselspannungen zwischen beispielsweise 100 V und 250 V mit beispielsweise Frequenzen im Bereich von 45 Hz bis 65 Hz an Anschlüssen S1, S2 gespeist werden. Mit Hilfe eines Varistors RV1 und einer Schmelzsicherung F1 oder mit Hilfe eines Sicherungswiderstands mit Temperatursicherung wird die Schaltung gegen Überspannung und Überstrom (Surge und Burst) geschützt bzw. im Fehlerfall vom Netz getrennt. Zwei Dioden D1, D2 und ein Kondensator C1 dienen als Gleichrichter für eine als Wechselspannung vorliegende Netzspannung. Die zweite der beiden Dioden D1, D2 dient zudem als EMV-Massnahme, um Gleichtaktstörungen abzuschwächen. Mit einem Seriewiderstand R13 wird ein Strom beim Anlaufen ("inrush current") sowie beim Nachladen im Betrieb begrenzt. Die Leistungsübertragung geschieht mittels eines magnetisch gekoppelten Schwingkreises bestehend aus einer Serieschaltung einer Primärwicklung L1 und eines Schwingkreiskondensators C6. Eine Diode D3 schützt Q1 gegen Überspannung am Verbindungspunkt von R1 und C2. Ein weiterer Kondensator C2 dient im Einschaltmoment dazu, dass die volle Eingangsspannung an R1 anliegt und dadurch der Transistor Q1 gesperrt bleibt und der Schwingkreis erst mit Verzögerung und bestimmten Spannungspotentialen anläuft. Darüber hinaus dient C2 zusammen mit C6 als kapazitiver Spannungsteiler welcher dafür sorgt, dass ein durch die Kapazitätswerte festgelegter Teil der wechselnden Schwingkreisspannung an C2 anliegt. Zudem ist C2 durch die Parallelschaltung mit C1 in Reihe R1 mit einer DC Offsetspannung beaufschlagt. Ein sich dadurch ergebene Mischspannung an R1 dient nun der Regelung der Verstärkung respektive der Versorgung des Schwingkreises mit Energie durch einen Primärtransistor oder Transistor Q1. Sobald die überlagerten Spannungen an R1 unter die Differenz der fest durch die Eingangsspannung und einen Spannungsteiler R2, R3, R4 und R6 vorgegebene Spannung an der Basis von Q1 und D3 sinkt, öffnet die Kollektor-Emitter Strecke des Primärtransistor Q1. Dies ist der Fall, wenn der Strom durch die Primärwicklung L1 gerade in die gleiche Richtung fließt wie der Primärtransistor Q1 mit seiner Kollektor-Emitter Strecke diesen Strom auch verstärken kann. Die Verstärkung des Transistors ist durch die Kapazität C3 für Wechselspannungen quasi maximal. Dies führt dazu, dass die Energiezuführung pulsartig geschieht und nur begrenzt wird durch die Induktivität L1 sowie durch die Spannungsgegenkopplung durch R1.

Eine Mitkopplung des weiter Aufschwingens und dadurch sich steigernden Energiezuflusses wird nun durch die Detektionswicklung L3 gegengekoppelt. Grundsätzlich findet keine Energiezufuhr statt, wenn ein zweiter Transistor Q2 leitend ist und dadurch der Primärtransistor Q1 durchgehend sperrt. An der mit der Primärwicklung L1 magnetisch gut gekoppelten Detektionswicklung L3 tritt die über das Windungsverhältnis zur Spannung an L1 proportionale Spannung auf (da hier kaum eine Belastung anliegt). Die Spannung an der Detektionswicklung L3 wird durch eine Diode D4 gleichgerichtet und durch eine Kapazität C5 gespeichert. Sobald der Spitzenwert der Spannung an der Detektionswicklung L3 über die Spannung einer Gleichrichterdiode D4 und einer Zenerdiode D6 ansteigt und sich an R9 eine Spannung aufgebaut hat welche den zweiten Transistor Q2 durchsteuert, wird das weitere Aufschwingen der Spannung durch weitere Energiezuführung zum Primärtransistor Q1 verhindert, da das Basispotential von Q1 verringert wird. Eine verzögerte Reaktion der Detektionsschaltung sorgt dafür, dass dieser Zustand einige Zeit bestehen bleibt. Während dieser Zeit wird durch einen Dämpfungswiderstand R7 im Schwingkreis die Energie und somit die Spannung im Schwingkreis durch Dämpfung abgebaut. Folglich sinkt auch die Spannung an der Detektionswicklung L3, der zweite Transistor Q2 sperrt wieder mit genannter Verzögerung, und die durchgehende Sperrung des Primärtransistor Q1 ist aufgehoben.

Das beschriebene Auf- und Abschwingen des Schwingkreises wiederholt sich unter geringer Leistungsaufnahme der Gesamtschaltung, bis eine zusätzliche Verbraucherwicklung in den Magnetkreis eingebracht wird. Diese dämpft die Spannung an der Detektionswicklung L3, so dass die Spannung an der Kapazität C5 nicht über die Schwelle ansteigt bei welcher der zweite Transistor Q2 aufgesteuert wird. In diesen Zustand schwingt der Schwingkreis, entsprechend einem Nennbetrieb zum Laden durchgehend auf einem hohen Spannungs- und Stromniveau, wobei an der Verbraucherwicklung entsprechend Leistung abgenommen werden kann.

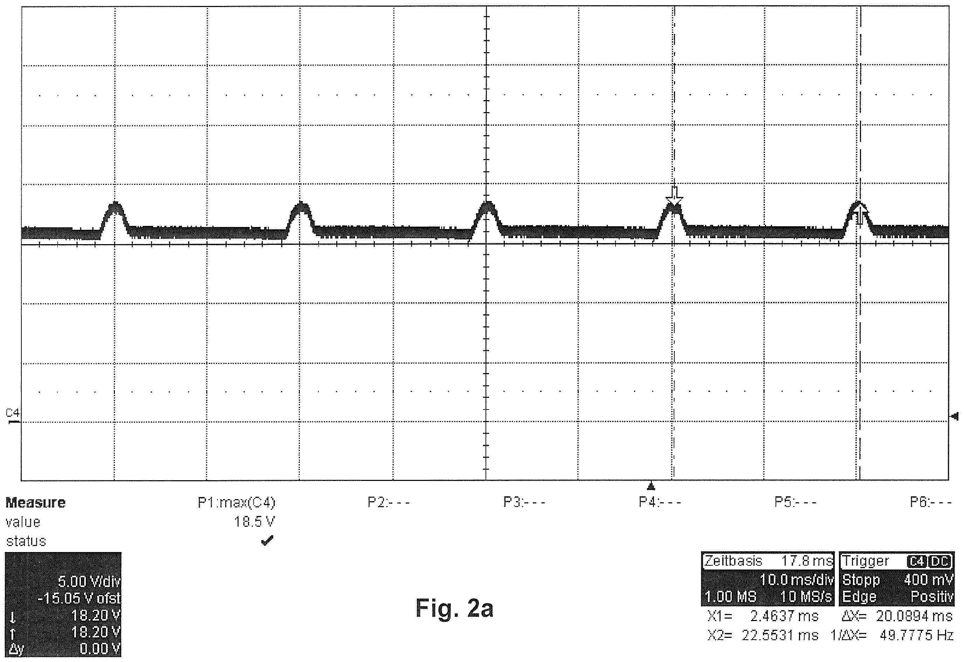

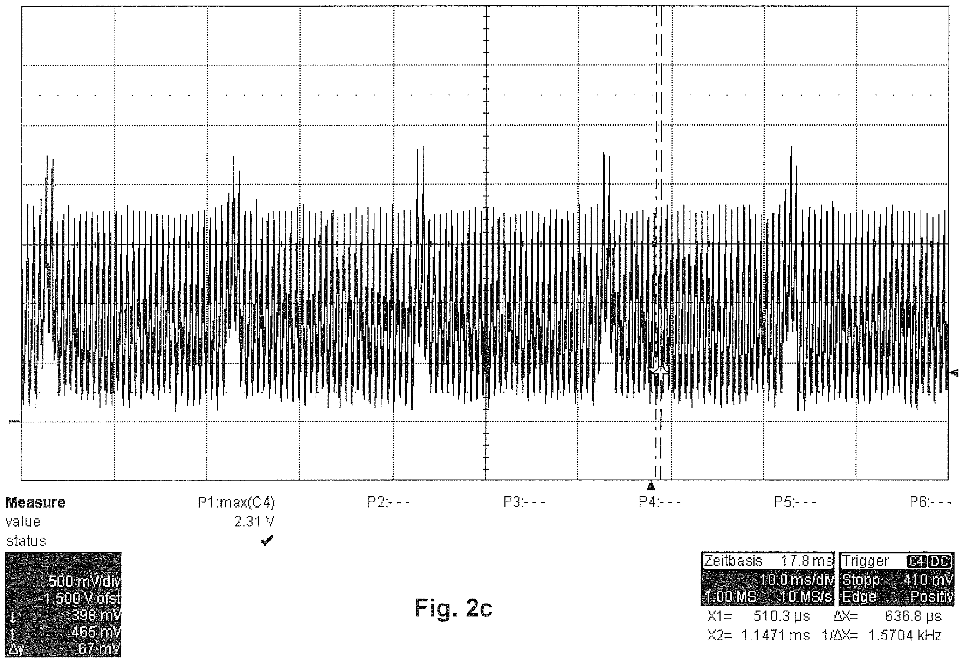

**Figuren 2a****-e** zeigen zeitliche Verläufe von Grössen im Betrieb der Schaltung. Davon betreffen die **Figuren 2a****-b** die Schaltung in einem **belasteten** Zustand. Die **Figuren 2c****-e** zeigen einen Zustand **ohne Belastung** der Ladeschaltung. Dabei ist beispielsweise kein Handgerät in das Ladegerät eingesetzt, oder es ist dessen Batterie geladen.
- **Figur 2a** zeigt den Verlauf der Spannung über den Widerstand R6, also an der Basis des Primärtransistors Q1, im **belasteten** Zustand. Der horizontale Massstab entspricht 10 ms pro Einteilung und der vertikale Massstab 5 V pro Einteilung. Es ist erkennbar, wie die Spannung um einem hohen Wert, etwas über 15 V, variiert (mit einem zusätzliche 50-Hz-Rippel). Dies entspricht dem Ein- und Ausschalten des Primärtransistors Q1 mit der Frequenz des Schwingkreises, hier beispielhaft rund 90 kHz.

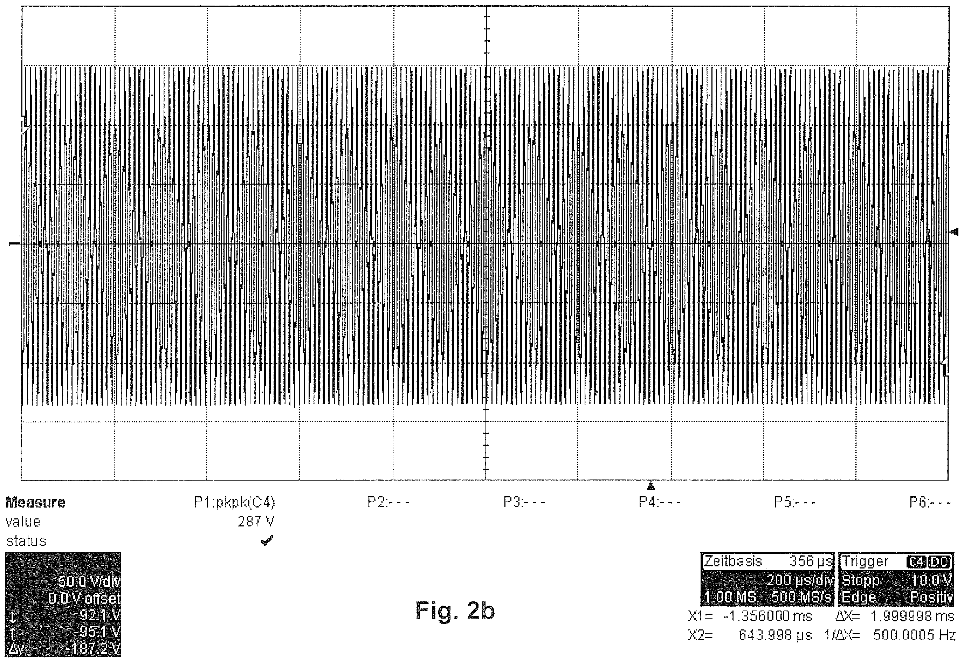

- **Figur 2b** zeigt den Verlauf der resultierenden Spannung über der Primärwicklung L1, also die Spannung des Schwingkreises, mit einem horizontalen Massstab von 0.2 ms pro Einteilung und einem vertikalen Massstab von 50 V pro Einteilung. Es ist erkennbar, wie die Spannung mit der erwähnten Frequenz des Schwingkreises und Amplituden um 150 V schwingt.
- **Figur 2c** zeigt den Verlauf der Spannung über den Widerstand R6 im **unbelasteten** Zustand. Der horizontale Massstab entspricht 10 ms pro Einteilung und der vertikale Massstab 0.5 V pro Einteilung. Es ist erkennbar, wie die Spannung in einem Bereich zwischen etwas mehr als Null und etwas weniger als 2 V variiert.

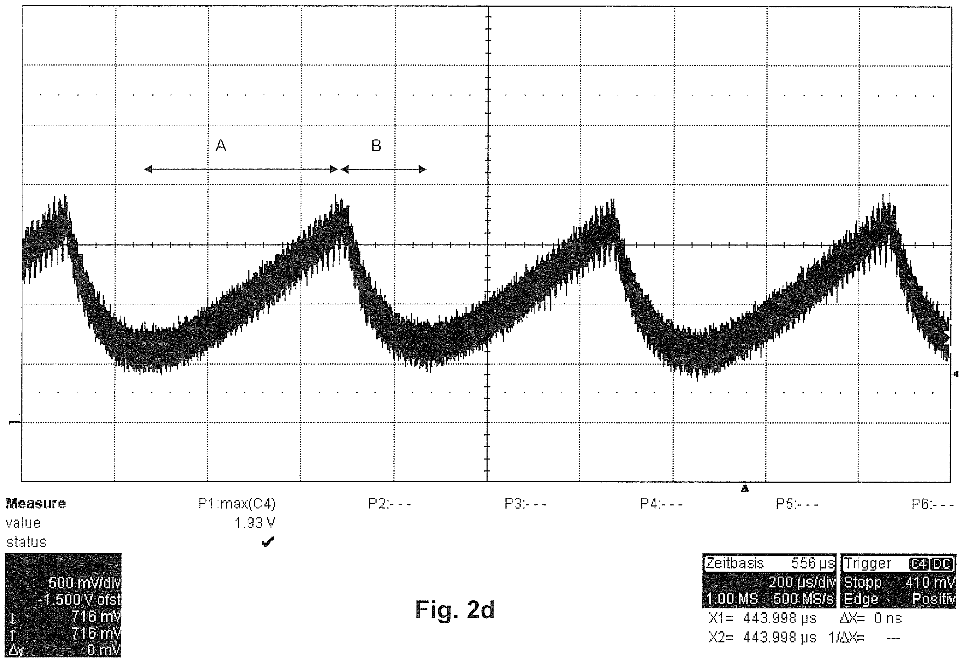

- **Figur 2d** zeigt Verlauf derselben Grösse wie Figur 2b, also die Basisspannung des Primärtransistors Q1 im unbelasteten Zustand, aber mit einem horizontalen Massstab von 0.2 ms pro Einteilung.

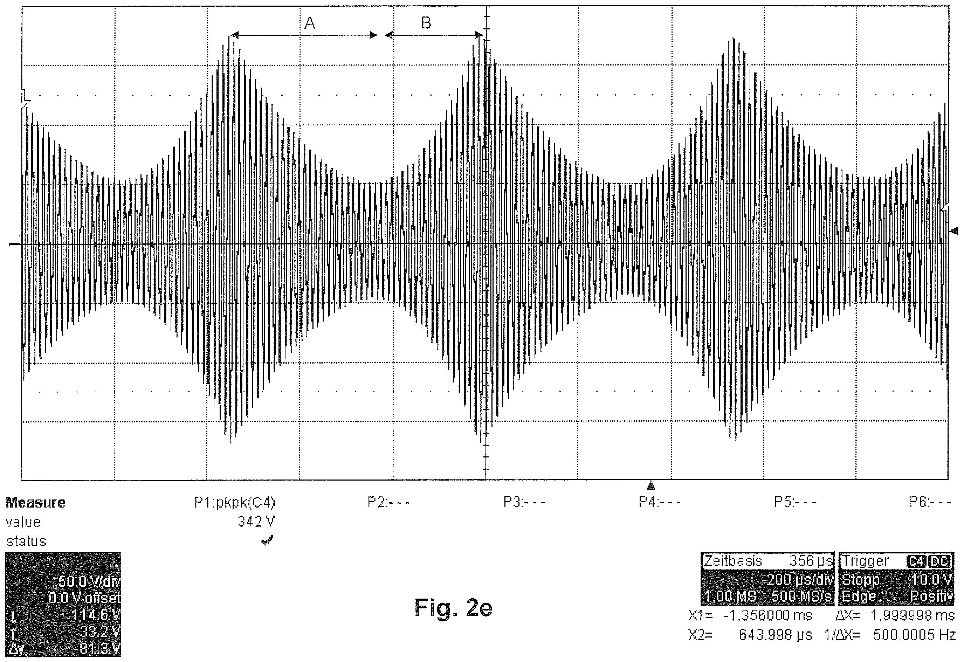

- **Figur 2e** zeigt den dazu gehörigen Verlauf der Spannung über der Primärwicklung L1, mit einem horizontalen Massstab von 0.2 ms pro Einteilung und einem vertikalen Massstab von 50 V pro Einteilung.

Es ist in **Figuren 2d** und **2e** erkennbar, wie die mittlere Basisspannung periodisch ansteigt und dann wieder rasch absinkt. Das Ansteigen der Basisspannung führt zu einem Abklingen der Spannung im Schwingkreis (Abschnitt A). Ist die Schwingkreisspannung und damit auch die Spannung in der Detektionsschaltung soweit abgeklungen, dass der zweite Transistor Q2 sperrt und der Primärtransistor Q1 leitet, so wird wieder vermehrt Energie in den Schwingkreis gepumpt. Dieses Aufladen des Schwingkreises entspricht einem relativ schnellen Anstieg der Schwingkreisspannung respektive einem schnellen Abfall der Basisspannung (Abschnitt B). Das Aufladen dauert bis der zweite Transistor Q2 wieder leitend wird und der Primärtransistor Q1 sperrt. Der beschriebene Vorgang wiederholt sich periodisch entsprechend einer Zeitkonstante, die im wesentlichen durch ein zwischen Kollektor und Basis des zweiten Transistors geschaltetes LC-Glied mit einer Kapazität C4 und einem Widerstand R8 bestimmt wird. Der Dämpfungswiderstand R7 hilft, den Primärschwingkreis zusätzlich zu dämpfen. Zudem beschränkt er den Strom durch den Schwingkreiskondensators C6 und den Primärtransistor Q1.

Im vorliegenden Beispiel wiederholt sich das Aufladen und Entladen des Schwingkreises mit einer Frequenz von rund 1.5 bis 1.6 kHz. Damit wird der Schwingkreis am Schwingen gehalten, so dass, wenn eine Last auftritt, diese auch detektiert werden kann.

Die genannte Kapazität C4 des LC-Gliedes hat eine zweite Funktion, indem sie mit einer weiteren Kapazität C3, welche zwischen einer Speisespannungsschiene und dem Kollektor des Primärtransistors geschaltet ist, eine Starthilfe für den Schwingkreis bildet. Dazu bilden die beiden Kapazitäten C3, C4 beim Einschalten, d.h. bei einsetzender Speisung, einen kapazitiven Spannungsteiler, welcher die Spannung an der Basis von Q1 anhebt, so dass dieser leitend wird und das Aufschwingen des Schwingkreises beginnt.

Durch die beschriebene Schaltung kann die vom Ladeteil aufgenommene Leistung von beispielsweise 1.5 W im belasteten Zustand auf beispielsweise 0.3 W im unbelasteten Zustand reduziert werden.

Die beschriebene Schaltung kann mit Speise-Wechselspannungen von beispielsweise 100 V bis 250 V mit beispielsweise Frequenzen im Bereich von 45 Hz bis 65 Hz operieren. Die Detektion des Ladezustandes und das Zurückregeln der Speisung des Schwingkreises passen sich dabei automatisch an, wenn je nach Höhe der Speise-Wechselspannung das Aufschwingen des Schwingkreises schneller oder langsamer geschieht.

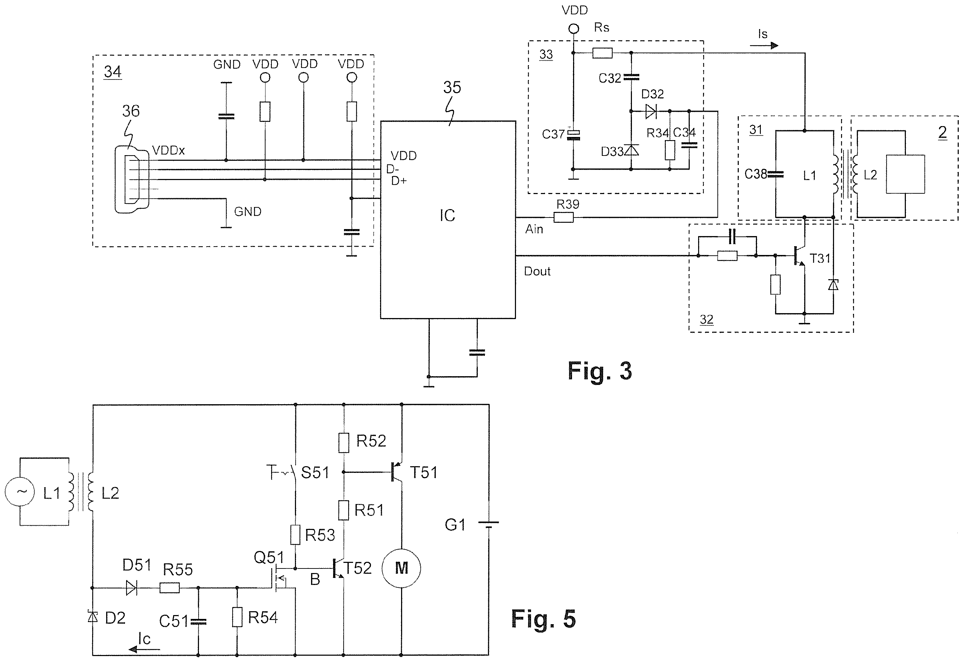

**Figuren 3-4** zeigen weitere Schaltungen für ein Ladeteil. Diese verwenden einen Mikroprozessor oder Mikrocontroller oder einen anwendungsspezifischen integrierten Schaltkreis (ASIC) 35. Dieser ist durch einen USB (universal serial bus)-Anschluss 34 mit beispielsweise einem Stecker oder einer Buchse 36 gespeist. Der USB-Anschluss weist Beschaltungselemente zum Terminieren der verschiedenen Leitungen in bekannter Weise auf. Der Mikroprozessor oder Mikrocontroller erfasst an einem Analogeingang Ain ein Strommesssignal und steuert mit einem Digitalausgang Dout mittels Pulsbreitenmodulation (PWM) über ein Treibersignal einen Schalter T31 einer Treiberschaltung 32 zur Speisung eines Schwingkreises 31 zur Energieübertragung an. Der Schalter T31 ist dadurch jeweils während der Dauer eines Pulses des Treibersignals eingeschaltet und während der restlichen Zeit ausgeschaltet Der Schwingkreis 31 weist eine Schwingkreiskapazität C8 und eine Primärinduktivität L1 auf. Ist ein Handgerät oder Mobilteil 2 so angeordnet, dass eine Sekundärinduktivität oder Sekundärwicklung L2 magnetisch mit der Primärinduktivität gekoppelt ist, so kann Energie an das Handgerät 2 übertragen werden. Die PWM-Modulation geschieht mit einer Frequenz, welche im Wesentlichen gleich der Resonanzfrequenz des Schwingkreises 31 ist. Diese Frequenz kann grösser sein als 20 kHz, also oberhalb des hörbaren Bereichs. Diese Frequenz kann auch kleiner als 100 kHz sein, um elektromagnetische Störungen durch Harmonische zu vermeiden. Zur Verringerung von Schaltverlusten wird die Frequenz vorteilhaft eher tief gewählt. Die Breite der Pulse bestimmt die Einschaltdauer des Schalters T31 und damit die Zeitdauer während einer Schwingperiode, in welcher der Schwingkreis gespeist wird. Die Einschaltdauer (duty-cycle) beträgt beispielsweise zwischen 0 und 40%.

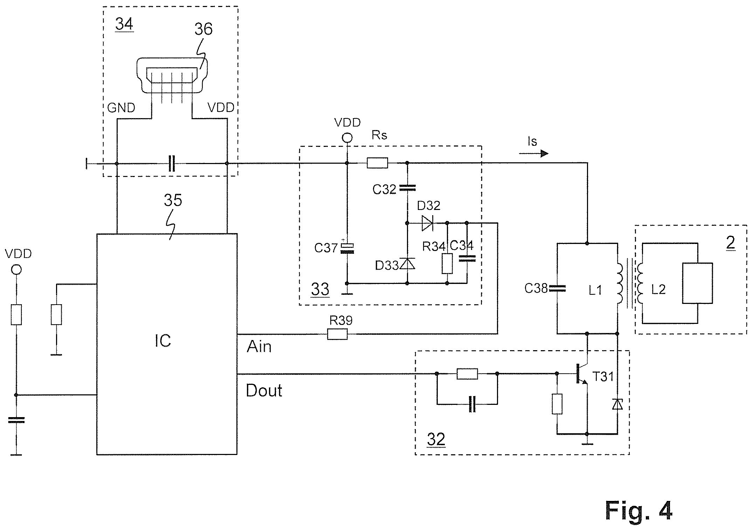

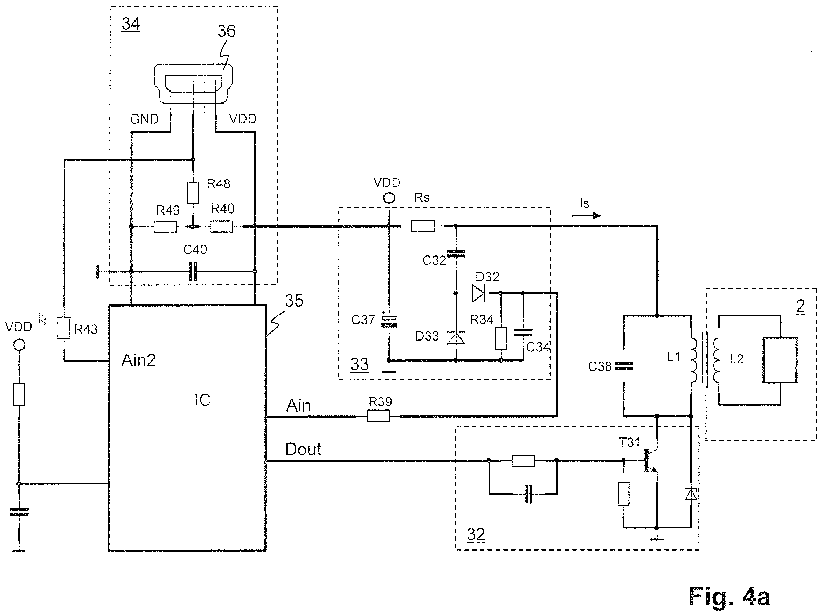

Die Schaltungen der Figuren 3 und 4 weisen ferner eine Strommessschaltung 33 auf. Diese weist einen Shuntwiderstand Rs auf, welcher in einer Versorgungsleitung des Schwingkreises 31 geschaltet ist. Der Strom Is, der durch den Schalter T31 geschaltet von einer Versorgungsleitung in den Schwingkreis fliesst, fliesst somit auch durch den Shuntwiderstand Rs. Eine Spannung über dem Shuntwiderstand Rs wird mittels einer Gleichrichter- und Filterschaltung C32, D32, D33, R34, C34 erfasst und gleichgerichtet und gefiltert. Das gefilterte Signal erscheint über einen Schutzwiderstand R39 am Analogeingang Ain des Mikrocontrollers oder ASIC 35. Es kann im wesentlichen proportional zum durchschnittlichen Ladestrom Is durch den Shuntwiderstand Rs sein.

Die Regelung des Ladevorgangs funktioniert wie folgt: Sie basiert auf der Tatsache, dass bei beim Vorhandensein einer Last, welche dem Schwingkreis 31 Energie entzieht, also bei eingesetztem und auch Energie beziehendem (beispielsweise nicht voll geladenem) Mobilteil 2, der durchschnittliche Ladestrom durch den Shuntwiderstand Rs in den Schwingkreis grösser ist als ohne eine Last. Beispielsweise ist der Strom ohne Last rund 100 mA, mit Last 160-200 mA. Dem entsprechend kann ein Schwellwert, ab welchem eine als Last als vorhanden gilt, einem Strom von 160 mA entsprechen, und diesem wiederum eine Spannung am Analogeingang Ain von rund 100 mV, je nach Auslegung der Strommessschaltung 33.

Anhand des Strommesssignales am Analogeingang Ain kann eine Lastdetektion durchgeführt werden. Dazu kann das folgende Verfahren durch den Mikroprozessor oder Mikrocontroller oder ASIC 36 durchgeführt werden: Wenn das Ladeteil mit Strom versorgt ist, ist es zunächst in einem Schlafzustand. In diesem wird wiederholt während einer Testzeitdauer über den Digitalausgang Dout der Schalter T1 mit einem PWM-Signal als Treibersignal angesteuert. Während der übrigen Zeit wird kein Treibersignal erzeugt und bliebt also der Schalter T1 gesperrt. Die Testzeitdauer kann zwischen wenigen Millisekunden oder 10 Millisekunden und mehreren Sekunden dauern. Insbesondere kann sie rund 50 Millisekunden betragen. Während der Testzeitdauer wird am Analogeingang Ain das resultierende Strommesssignal erfasst. Das Strommesssignal wird mit einem ersten Schwellwert verglichen. Ist das Strommesssignal kleiner als der Schwellwert, so bedeutet dies, dass keine Last vorhanden ist (kein Handgerät vorhanden, oder Handgerät benötigt keine Energie). In diesem Fall wird das PWM-Signal unterbrochen und erst nach Ablauf eines Messintervalles ein neuer Test in der gleichen Art durchgeführt. Das Messintervall kann zwischen wenigen Sekunden, also 1-2 Sekunden bis zu mehreren Minuten, also 1 bis 5 bis 10 Minuten dauern. Insbesondere kann es rund 10 Sekunden betragen. Dieses Vorgehen, also das intermittierende Testen mit dem genannten Messintervall kann wiederholt werden, solange das Ladeteil gespeist ist. Ist das Strommesssignal grösser als der Schwellwert, so bedeutet dies, dass eine Last vorhanden ist. Dann wird das PWM-Signal und damit die Speisung des Schwingkreises 31 weitergeführt. Das Ladeteil ist dabei in einem Ladezustand. Während der Speisung des Schwingkreises 31 wird das Strommesssignal weiter überwacht. Wenn das Strommesssignal unter einen zweiten Schwellwert fällt (der gleich oder verschieden vom ersten Schwellwert sein kann), wird das Ladeteil wieder in den Schlafzustand geführt. Es testet also wieder, wie oben beschrieben, mit dem Messintervall intermittierend, ob eine Last vorhanden ist.

Im Ladezustand kann gemäss einer Ausführungsform die Pulsbreite des PWM-Signals nach Massgabe des Strommesssignals geregelt werden. Dazu kann das Strommesssignal in der Regeleinrichtung 35 mit einem beispielsweise gespeicherten Sollwert verglichen werden. Anhand der dadurch resultierenden Regeldifferenz kann die Pulsbreite über einen Regler angepasst werden. Der Regler ist beispielsweise ein P, PI oder PID Regler.

Ein speisendes Gerät, an welchen das Ladeteil über den USB-Anschluss 34 zum Speisen der Ladeschaltung angeschlossen werden kann, ist typischerweise ein Laptop-Computer oder ein anderes portables oder ortsfestes Datenverarbeitungsgerät. Es kann aber auch ein Akkupaket oder ein Netzteil mit einem USB-Anschluss sein, welches nur zur Speisung und nicht zur Kommunikation über eine physische USB-Verbindung eingerichtet ist.

In der Ausführungsform gemäss der **Figur 3** ist der Mikroprozessor oder Mikrocontroller 35 zur Kommunikation über eine USB-Schnittstelle eingerichtet. Dabei kann der Mikroprozessor oder Mikrocontroller in an sich bekannter Weise gemäss dem USB-Protokoll bei dem speisenden Gerät einen Leistungsbedarf anmelden. Wird die verlangte Leistung durch das speisende Gerät zugestanden, so kann das Ladegerät einen Ladevorgang starten. In bekannter Weise kann das Ladegerät seine Präsenz dem speisenden Gerät in regelmässigen Abständen mitteilen oder bestätigen.

Wird die verlangte Leistung nicht zugestanden, so kann das Ladegerät entweder auf den Ladevorgang verzichten. Es kann dabei optional eine akustische und/oder optische Anzeige auslösen, welche dem Benutzer anzeigt, dass die Ladeleistung nicht ausreichend ist. Oder das Ladegerät kann, nach gegebenenfalls erneuter Anfrage beim speisenden Gerät, einen Ladevorgang mit reduzierter Leistung starten. Zur Reduktion der Leistung kann der Aussteuerungsgrad der PWM-Modulation auf einen Maximalwert nach Massgabe der Leistung reduziert werden.

In der Ausführungsform gemäss der **Figur** 4 ist der Mikroprozessor oder Mikrocontroller 35 nicht zur Kommunikation über eine USB-Schnittstelle eingerichtet, sondern bezieht lediglich einen Speisestrom aus der physischen USB-Verbindung.

In der Ausführungsform gemäss der **Figur 4a** liegt zusätzlich zu jener der Figur 4 eine Schaltungsanordnung vor, welche es erlaubt, auch ohne Implementation eines USB-Kommunikationsprotokolls zu verhindern, dass das Ladeteil ein speisendes Gerät oder Versorgungsgerät zu sehr belastet. Die Schaltungsanordnung erlaubt, bei entsprechender Programmierung des Mikroprozessors oder Mikrocontrollers 35, zu erkennen, ob das Ladeteil 1 von einem Netzgerät oder beispielsweise von einem PC oder Laptop gespeist wird.

Die Schaltungsanordnung weist einen Spannungsteiler R49, R40 zwischen den beiden USB-Versorgungsleitungen GND, VDD auf. Dessen Mittelpunkt ist über einen Trennwiderstand R48 und über einen Verbindungspunkt Vp an eine von den Datenleitungen D+ D- der USB-Schnittstelle angeschlossen. Der Verbindungspunkt Vp ist über einen weiteren Widerstand R43 an einen Vergleichseingang Ain2, beispielsweise einen Analogeingang, des Mikroprozessors oder Mikrocontrollers 35 angeschlossen.

Die Schaltungsanordnung funktioniert wie folgt: Am Mittelpunkt des Spannungsteilers R49, R40 ergibt sich eine Mittelpunktspannung, beispielsweise von 3.3 Volt. Dieser Level kann der USB-Norm entnommen werden. Trennwiderstand R48 kann beispielsweise 18 kOhm betragen. Die Mittelpunktspannung ist gleich einer nominellen Mittelpunktspannung, wenn das Ladeteil 1 nicht an ein speisendes Gerät angeschlossen, ist.

Im Ruhezustand sind im speisenden Gerät, das beispielsweise ein Computer ist, die Leitungen D- und D+ auf 0 Volt. Durch das Anheben der Spannung an D- oder D+ erkennt das speisende Gerät, dass ein USB-Gerät eingesteckt wurde. Das speisende Gerät versucht mit dem vermeintlichen USB-Gerät zu kommunizieren, in diesem Fall mit dem Ladeteil 1. Dies dauert beispielsweise ca. 3 Sekunden. Wenn, wie im vorliegenden Fall, das speisende Gerät keine Antwort vom Ladeteil erhält, so wird beim speisenden Gerät beispielsweise eine Meldung wie
"Gerät nicht erkannt"
angezeigt und es wird die Datenleitung wird auf einen Level von 2 Volt gezogen. Aufgrund dieser Änderung kann das Ladeteil erkennen, ob es an einem Netzteil oder an einen Computer oder ähnliches Gerät angeschlossen wurde.

Die Spannung an der Datenleitung respektive am Verbindungspunkt Vp wird über den weiteren Widerstand R43 dem Vergleichseingang Ain2 des Mikroprozessors oder Mikrocontrollers 35 zugeführt.

Bei einem USB-Netzgerät sind die Datenleitungen nicht angeschlossen, folglich ergibt sich am Vergleichseingang Ain2 die nominelle Mittelpunktspannung (beispielsweise die 3.3 Volt), und es kann ein Laden durchgeführt werden, d.h. die volle benötigte Leistung dem speisenden Gerät entnommen werden. Wären die Datenleitungen unzulässigerweise mit Ground (VSS) oder +5 Volt (VDD) verbunden kann, so kann auch in diesem Fall ein Laden durchgeführt werden.

Das entsprechende Verfahren, beispielsweise implementiert im Mikroprozessors oder Mikrocontrollers 35, kann wie folgt ablaufen: nach dem Einstecken des USB-Kabels am speisenden Gerät geschieht Folgendes:
- Mikroprozessor oder Mikrocontroller 35 initialisieren;
- eine Wartezeit, beispielsweise von 3 Sekunden, warten;
- Spannung am Vergleichseingang Ain2 messen, dies ergibt einen Wert Uv;
   ∘ Liegt der Messwert innerhalb eines Bandes um die nominelle Mittelpunktspannung, so entspricht dies dem Sachverhalt, dass das speisende Gerät eine Kommunikation nach USB-Standard realisiert. Beispielsweise ist dies der Fall, wenn Uv > 1.8 Volt oder Uv < 2.2 Volt. Das Ladeteil 1 kann somit entscheiden, nicht zu laden, um das speisende Gerät zu schonen. Es wird also der Ladevorgang nicht gestartet.
   ∘ Liegt der Messwert ausserhalb des Bandes um die nominelle Mittelpunktspannung, so entspricht dies dem Sachverhalt, dass das speisende Gerät ein Netzteil ist. Beispielsweise ist dies der Fall, wenn Uv <= 1.8 Volt oder Uv >= 2.2 Volt, Das Ladeteil 1 kann somit entscheiden, zu laden. Es wird also der Ladevorgang gestartet.

Beim Entscheid, nicht zu laden, kann optional eine akustische und/oder optische Anzeige auslösen, welche dem Benutzer anzeigt, dass die Ladeleistung nicht ausreichend ist. Oder das Ladegerät kann einen Ladevorgang mit reduzierter Leistung starten.

**Figuren 5-6** zeigen Schaltungen für ein Handgerät 2. **Figur 5** zeigt eine Schaltung, die nur mit diskreten Bauteilen, also ohne integrierte Schaltkreise, gebildet ist. Über die Sekundärwicklung L2 empfängt die Schaltung Energie vom Ladeteil 1. Die Spannung an der Sekundärwicklung L2 wird über eine Gleichrichterdiode D2, in diesem Fall eine Schottky-Diode, gleichgerichtet und lädt einen Akku G1. Ein Schalter S51 steuert über eine Zwei-Transistorschaltung T51, T52 einen Motor M des Handgeräts 2 an. Bei betätigtem Schalter wird das Potential am Steuereingang B eines Eingangstransistors T52 angehoben (zum Pluspol der Schaltung respektive des Akkus). Dadurch werden die beiden Transistoren T51, T52 leitend und wird der Motor M vom Akku G51 gespeist.

Eine Schutzschaltung D51, R55, C51, R54, Q51 ist dazu eingerichtet, die Speisung des Motors auszuschalten, wenn das Handgerät 2 im Ladeteil 1 eingesetzt ist und mit Energie versorgt wird. Die Schutzschaltung weist einen Messgleichrichter D51, R55, C51 auf, der beispielsweise als Halbwellengleichrichter ausgebildet ist. Dieser erfasst einen Ladestrom Ic welcher durch die Sekundärwicklung L2 und durch den Akku G1 fliesst. Er basiert auf einer Grösse aus dem Ladestromkreis, hier beispielhaft auf der Spannung über der Gleichrichterdiode D52. Von dieser Spannung wirkt jeweils eine Halbwelle über eine weitere Diode D51 zum Laden eines Messkondensators C51. Ein MOSFET Q1 ist zwischen einem Steuereingang B des Eingangstransistors T52 und einem niedrigeren Potential geschaltet (zum Minuspol der Schaltung respektive des Akkus). Am Steuereingang des MOSFET Q1 liegt die Spannung des Kondensators C51 an. Ist die Spannung am Kondensator C51 ausreichend hoch, so steuert der MOSFET Q1 durch respektive wird leitend. Dadurch zieht er die Spannung am Steuereingang B des Eingangstransistors T52 nach unten und schaltet somit die Speisung des Motors aus, auch wenn der Schalter S51 betätigt, also leitend ist.

Zusammengefasst wird also die Speisung des Motors ausgeschaltet falls ein Signal im Ladstromkreis auftritt, welches anzeigt, dass das Handgerät 2 vom Ladeteil 1 mit Energie versorgt wird.

Die ganze Schaltung kann auch mit dualen Schaltelementen (NPN anstelle von PNP-Transistoren und umgekehrt) und vertauschten Polaritäten der übrigen Elemente realisiert werden.

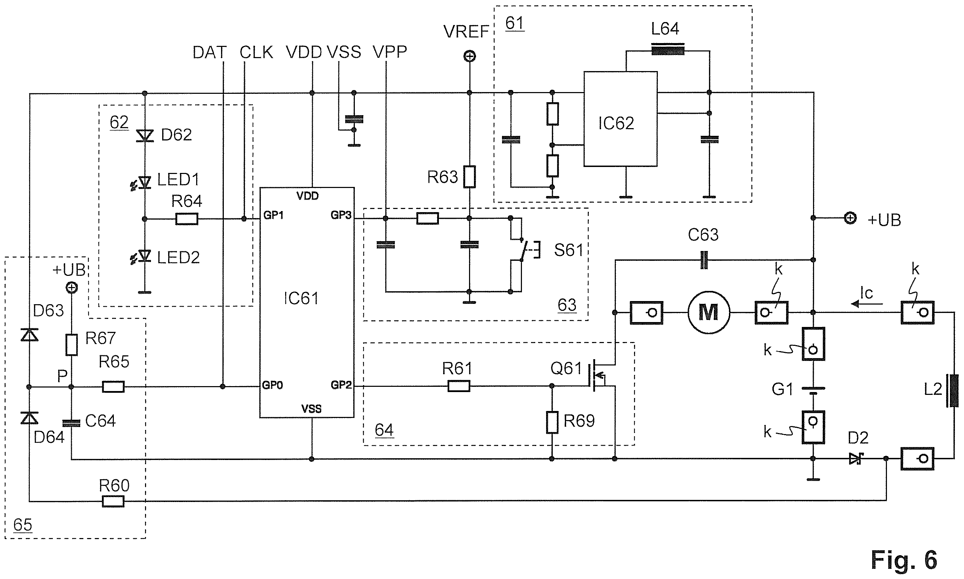

**Figur 6** zeigt eine weitere Schaltung für ein Handgerät 2. Die Schaltung weist einen integrierten Schaltkreis IC61 auf, der ein Mikroprozessor oder Mikrocontroller oder ASIC sein kann. Im Folgenden wird er der Einfachheit halber als Mikrocontroller bezeichnet. Die Schaltung weist ferner auf:
- Eine Sekundärwicklung L2 und eine Gleichrichterdiode D2, in diesem Fall eine Schottky-Diode, zum Gleichrichten einer Spannung an der Sekundärwicklung L2 und zum Laden eines Akkus G1. Einzelne Bauteile wie die Sekundärwicklung L2, der Akku G1 und eine Motor M sind über Anschlussstellen k an eine Printplatte angeschlossen, auf welcher die übrigen Teile angeordnet sein können.
- Eine **Treiberschaltung** 64 mit welcher ein Stromkreis durch den Motor M und den Akku G1 mittels eines Halbleiterschalters Q61 (typischerweise eines MOSFET) geschlossen und geöffnet werden kann und somit der Motor M ein- und ausschaltbar ist. Die Treiberschaltung ist an einen Steuerausgang GP2 des Mikrocontrollers IC61 angeschlossen und über diesen angesteuert.
- Eine **Speiseschaltung** 61 mit einem DC-DC-Wandler. Dieser weist einen integrierten Wandlerbaustein IC62 auf, beispielsweise vom Typ MCP1624, und eine Wandlerinduktivität L64. Der DC-DC-Wandler ist eingerichtet, eine konstante und stabile Gleichspannung im wesentlichen unabhängig von der Spannung des Akkus G1 zu erzeugen. Im vorliegenden Beispiel ist die Gleichspannung 3V und kann die Spannung des Akkus G1 zwischen 0.8 V und 1.4 V betragen. Mit dieser Gleichspannung ist eine Speisung weiterer Elemente der Schaltung über einen positiven und einen negativen Versorgungsspannungsanschluss realisiert. Da die Gleichspannung auf einen bekannten Wert geregelt ist, dient sie gemäss einer Ausführungsform auch als Referenz zum Überwachen der Akkuspannung durch den Mikrocontroller IC61.
- Eine **Tasterschaltung** 63 mit einem Taster S61 und einer Entprellschaltung. Die Tasterschaltung 63 ist an einen Schaltereingang GP3 des Mikrocontrollers IC61 zur Erfassung von Betätigungen des Tasters S61 angeschlossen.
- Eine **Anzeigeschaltung** 62 zur Anzeige von Betriebszuständen des Handgeräts 2. Diese weist eine Serieschaltung einer Diode D62 mit einer oberen Leuchtdiode LED1 und einer unteren Leuchtdiode LED2 auf, welche zwischen den positiven und den negativen Versorgungsspannungsanschluss geschaltet ist. Ein gemeinsamer Anschlusspunkt zwischen den beiden Leuchtdioden LED1, LED2 ist über einen Begrenzungswiderstand R64 an einen Anzeigenausgang GP1 des Mikrocontrollers IC61 zum Ansteuern der Leuchtdioden geschaltet.
- Eine **Messschaltung** 65 zum Erfassen der Präsenz eines Ladegerätes. Die Messschaltung ist an einen Messeingang GP0 des Mikrocontrollers IC61 angeschlossen.

Die **Messschaltung** 65 erlaubt die Realisierung von drei Funktionen über den gemeinsamen Messeingang GP0:
1. Ist die Sekundärwicklung L2 nicht gespeist und ist der Motor nicht in Betrieb, so kann der der Messeingang GP0 zur Programmierung des Mikrocontrollers IC61 verwendet werden.
2. Ist das Handgerät 2 in ein Ladeteil 1 eingesetzt und die Sekundärwicklung L2 gespeist, so kann am Messeingang GP0 die Präsenz des Ladeteils 1 erkannt werden.
3. Ist die Sekundärwicklung nicht gespeist, so kann am Messeingang GP0 der Ladezustand des Akkus G1 erfasst werden.

Die Messschaltung 65 ist dazu wie folgt aufgebaut: Die Messschaltung 65 weist einen Entkoppelwiderstand R65 auf, mit welchem ein Messpunkt P der Schaltung mit dem Messeingang GP0 verbunden ist. Der Messpunkt P ist über eine Messdiode D64 und einen Messwiderstand R60 an einem ersten Anschluss der Gleichrichterdiode D2 angeschlossen. Der Messpunkt P ist über einen Messkondensator C64 an einem zweiten Anschluss der Gleichrichterdiode D2 angeschlossen. Der Messpunkt P ist über eine Schutzdiode D63 an die positive Versorgungsspannung VDD angeschlossen. Der Messpunkt P ist über einen Batteriespannnungsmesswiderstand R67 an das Potential +UB eines (positiven) Pols des Akkus G1 angeschlossen.

Die Messschaltung 65 funktioniert wie folgt:
Der Entkoppelwiderstand R65 trennt die übrigen Elemente der Messschaltung 65 vom Messeingang GP0 ab und erlaubt die Programmierung des Mikrocontrollers IC61. Der Entkoppelwiderstand R65 schützt auch den Messeingang GP0 vor Spannungsspitzen am Messpunkt P, wie sie beispielsweise beim Ausschalten auftreten können.

Die Messdiode D64, der Messwiderstand R60 und der Messkondensator C64 bilden einen Messgleichrichter, der beispielsweise als Halbwellengleichrichter ausgebildet ist. Er erfasst jeweils eine Halbwelle der Spannung über der Gleichrichterdiode D2 und lädt damit den Messkondensator C64 auf. Anstelle der Gleichrichterdiode D2 kann auch ein anderes Element im Ladestromkreis verwendet werden, über welchem beim Vorhandensein eines Ladestroms 1c durch die Sekundärwicklung L2 respektive den Akku G1 eine Spannung auftritt, beispielsweise ein Messshunt. Die Gleichrichterdiode D2 oder das andere Element kann auch an einer anderen Stelle im Ladestromkreis angeordnet sein. Wenn also die Sekundärwicklung L2 gespeist ist und ein Ladestrom fliesst, wird der Messkondensator C64 aufgeladen. Diese Spannung wird am Messeingang GP0 gemessen. Sie zeigt an, dass das Handgerät 2 in einem Ladeteil 1 steht oder zumindest gespeist wird. Sollte der Motor M eingeschaltet sein, so kann mit dieser Spannung der Motor M ausgeschaltet werden.

Die Schutzdiode D63 leitet Überspannungen ab, die vom Ladestromkreis her über die Messdiode D64 zum Messpunkt P gelangen.

Der Batteriespannnungsmesswiderstand R67 zieht die Spannung am Messpunkt P zum Potential +UB entsprechend der Akkuspannung. Ist das Handgerät 2 nicht über die Sekundärwicklung L2 gespeist, so wird die Spannung am Messpunkt P wie auch am Messeingang GP0 gleich der Batteriespannung.

Die Spannung am Messpunkt P, wie sie durch den Ladestrom eingestellt wird, ist durch entsprechende Dimensionierung der Gleichrichterdiode D2 und des Messgleichrichters stets höher als die maximal mögliche Akkuspannung, beispielsweise 1.4 V. Somit kann Schwellwert festgelegt sein, der etwas über der maximalen Akkuspannung ist. Dann entspricht eine am Messeingang GP0 gemessene Spannung, welche unter dem Schwellwert liegt, der Akkuspannung, und eine Spannung, welche über dem Schwellwert liegt, zeigt an, dass das Handgerät 2 über die Sekundärwicklung L2 gespeist ist.

In der **Anzeigeschaltung** 62 werden mit einem einzigen Anzeigenausgang GP1 zwei Leuchtdioden LED1, LED2 kontrolliert. Ist der Anzeigenausgang GP1 hochohmig, so leuchtet keine der Leuchtdioden LED1, LED2, weil die Summe der Spannungsschwellen oder Schleusenspannungen der beiden Leuchtdioden LED1, LED2 und der dritten Diode D62 über der Speisespannung liegt. Beispielsweise sind diese Spannungen: LED1 (rot): 1.8V; LED2 (grün): 2.2V; D2: 0.7 V; Summe: 4.7V; Speisespannung 3V. Zieht der Mikrocontroller IC61 den Anzeigenausgang GP1 nach oben, zur positiven Versorgungsspannung VDD, so leuchtet die untere Leuchtdiode LED2. Zieht der Mikrocontroller IC61 den Anzeigenausgang GP1 nach unten, zur negativen Versorgungsspannung VSS, so leuchtet die obere Leuchtdiode LED1.

Ein niedriger Ladezustand des Akkus G1 kann durch Blinken einer roten Leuchtdiode angezeigt werden, beispielsweise dauernd, oder nur dann, wenn das Gerät in Betrieb ist, also der Motor eingeschaltet ist. Ein normaler Ladezustand des Akkus G1 kann durch Leuchten einer grünen Leuchtdiode LED2 angezeigt werden.

Ein entladener Ladezustand des Akkus G1 kann durch Dauerlicht einer roten Leuchtdiode während einer begrenzten Zeit angezeigt werden, beispielsweise während 5 bis 10 oder 15 Sekunden. Dies erfolgt beispielsweise, wenn der Schalter S61 betätigt wird. Die Energie, die nach einer Erholungsphase des Akkus G1 zur Verfügung steht, kann dann ausreichen, um die Leuchtdiode in dieser Weise zu aktivieren. Dabei wird der Motor nicht eingeschaltet.

Zusätzlich oder alternativ zur Anzeige mittels Leuchtdioden oder anderen optischen Elementen kann eine Anzeige von Betriebszuständen auch mittels akustischer Geber oder durch Vibration erfolgen.

Die **Treiberschaltung** 64 respektive der Halbleiterschalters Q61 kann durch den Mikrocontroller IC61 kontinuierlich eingeschaltet werden, so dass also der Motor dauernd durch den Akku gespeist ist. Der Mikrocontroller IC61 kann aber auch an seinem Steuerausgang GP2 ein beispielsweise pulsbreitenmoduliertes Signal erzeugen, so dass auch ein Strom durch den Motor M pulsbreitenmoduliert ist. Die Frequenz des Signals kann beispielsweise 400 Hz bis 500 Hz betragen. Es können durch Variation des Aussteuerungsgrades des pulsbreitenmodulierten Signals verschiedene Leistungsstufen oder Drehzahlen des Motors M realisiert werden, beispielsweise 60% und 80% nebst einer vollen Leistung von 100%. Ferner kann ein intermittierender Betrieb mit abwechselnd hoher und tiefer Leistung realisiert werden ("Massagebetrieb"). Beispielsweise wird bei einer Zahnbürste zyklisch während 600 Millisekunden der Motor mit voller Leistung betrieben und dann während 60 Millisekunden ausgeschaltet. Zeitintervalle und Leistungsstufen bei einem solchen intermittierenden Betrieb können je nach den verwendeten Bürsten und Getrieben gewählt werden.

Gemäss einer Ausführungsform ist ein Umschalten zwischen solchen Leistungsstufen realisiert, indem der Mikrocontroller IC61 bei jeder Betätigung des Tasters S61 um eine Stufe weiterschaltet. Beispielsweise also durchfährt das Gerät bei wiederholtem Betätigen des Tasters S61 die Folge von Zuständen: "Ausgeschaltet" - "100%" - "80%" - "60%" - "Ausgeschaltet".

Gemäss einer Ausführungsform ist der Mikrocontroller IC61 dazu eingerichtet, den Motor M auszuschalten, wenn während einer Zeitdauer, beispielsweise einer Zeit zwischen 6 und 10 Minuten, keine Betätigung des Tasters S61 stattgefunden hat. Damit wird verhindert dass unbeabsichtigtem Einschalten, beispielsweise beim Transport des Handgerätes, nicht der Akku entleert wird.

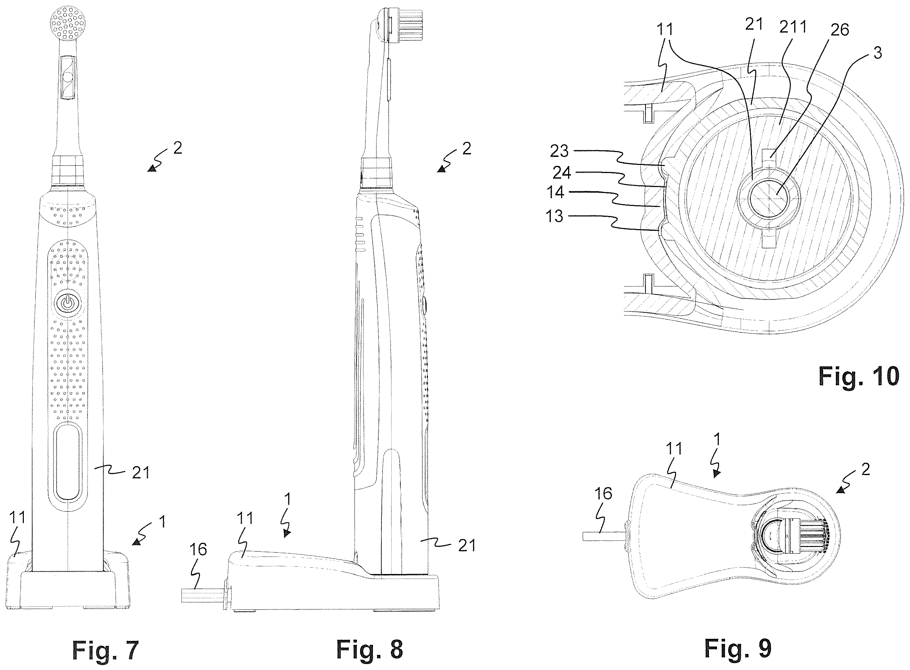

Die mechanische Konstruktion des Ladeteils 1 und des Handgeräts 2 sowie deren Zusammenspiel wird anhand der **Figuren 7-12** erklärt. Das Handgerät 2 ist dabei beispielhaft eine elektrische Zahnbürste, kann aber auch ein anders geartetes, typischerweise in einer Hand gehalten eingesetztes Kleingerät sein, insbesondere ein Gerät zur Körperpflege. Das Ladeteil 1 bildet eine Ladestation mit einem Fuss, welcher das aufgesetzte Handgerät 2 trägt und induktiv mit elektrischer Energie versorgen kann. Dabei steht am Ladeteil 1 ein Zapfen 12 vor, der im Wesentlichen zylindrisch geformt sein kann. Eine zur Form des Zapfens 12 korrespondierend geformte Aussparung 22 ist am Fuss des Handgeräts 2 ausgebildet. Der Zapfen 12 und die Aussparung 22 definieren die gegenseitige Position zwischen Ladeteil 1 und Handgerät 2 mit vorzugsweise geringem Spiel. Sie definieren die gegenseitige Position zumindest bezüglich Translation in einer Ebene normal zu einer Längsachse oder Symmetrieachse oder Zylinderachse des Zapfens 12. Ist das Handgerät 2 auf das Ladeteil 1 gesetzt, so steht es auf einer Auflagefläche 15 des Ladeteils 1. Dabei liegt eine Bodenfläche 25 des Handgeräts 2 der Auflagefläche 15 gegenüber. Die Bodenfläche 25 selber oder ein vorstehender Rand des Handgerät-Gehäuses 21 liegt auf der Auflagefläche 15 auf.

Gemäss einer Ausführungsform ist die gegenseitige Position bezüglich Rotation um eine Längsachse oder Symmetrieachse oder Zylinderachse des Zapfens 12 mit weiteren korrespondierenden Ausformungen an Ladeteil 1 und Handgerät 2 definiert. Im vorliegenden Beispiel sind dies Einbuchtungen 13 an einem Ladeteil-Gehäuse 11 und korrespondierende Vorsprünge oder Ausbuchtungen oder Nocken 23 an einem Handgerät-Gehäuse 21. Siehe dazu vor allem die **Figuren 10****,** **12, 13** und **14**. Beim Aufsetzen des Handgeräts 2 auf das Ladeteil 1 in der korrekten Winkelposition bezüglich Rotation um die Längsachse fahren die Nocken 23 in die Einbuchtungen 13 ein und verhindern eine weitere gegenseitige Verdrehung. Umgekehrt fährt ein zwischen den Einbuchtungen 13 angeordneter Vorsprung 14 am Ladeteil-Gehäuse 11 in einen zwischen den Nocken 23 am Umfang des Handgerät-Gehäuses 21 angeordneten Zwischenraum 24. Die **Figur 10** zeigt einen horizontalen Querschnitt durch Ladeteil 1 und Handgerät 2 auf der Höhe der Nocken 23 respektive Einbuchtungen 13. Der Querschnitt führt durch einen Boden 211 des Handgerät-Gehäuses 21. Das Handteil kann, muss jedoch nicht in die Verdrehsicherung gestellt werden. Wird das Handteil verdreht aufgesetzt ist die Funktion trotzdem gewährleistet.

Gemäss anderen Ausführungsformen der Erfindung (nicht in den Figuren dargestellt) können andere Kombinationen und Platzierungen von Ausformungen an Ladeteil 1 und Handgerät 2 vorliegen. Beispielsweise können Nocken am Ladeteil-Gehäuse 11 und korrespondierende Einbuchtungen am Handgerät-Gehäuse 21 ausgebildet sein. Ferner können korrespondierende Formen nicht nur wie gezeigt im Bereich des äusseren Umfangs des Fusses des Handgeräts 2 angeordnet sein, sondern alternativ oder auch zusätzlich im Bereich des Zapfens 12 und korrespondierend an der Innenseite der Aussparung 22. In weiteren Ausführungsformen kann die Form des unteren Teiles des Handgerät-Gehäuses 21 korrespondierend mit der Form einer Aufnahmeöffnung im Ladeteil 1 geformt sein, so dass das Handgerät 2 nur in einer einzigen Orientierung eingesetzt werden kann.

Bei vorstehenden Elementen am Handgerät-Gehäuse 21 wie den Nocken 23 resultiert als zusätzlicher Vorteil, dass ein Handgerät-Gehäuse 21 mit einem ansonsten im wesentlichen runden Querschnitt, wenn es auf eine horizontale Fläche gelegt wird, durch die vorstehenden Elemente gegen Wegrollen gesichert ist. Dabei sind im Falle einer Zahnbürste die vorstehenden Elemente vorteilhafterweise derart platziert, dass deren Borsten senkrecht nach oben zeigen. Ferner können die Nocken 23 dazu dienen, das Handgerät 2 in einer Verpackung korrekt zu positionieren.

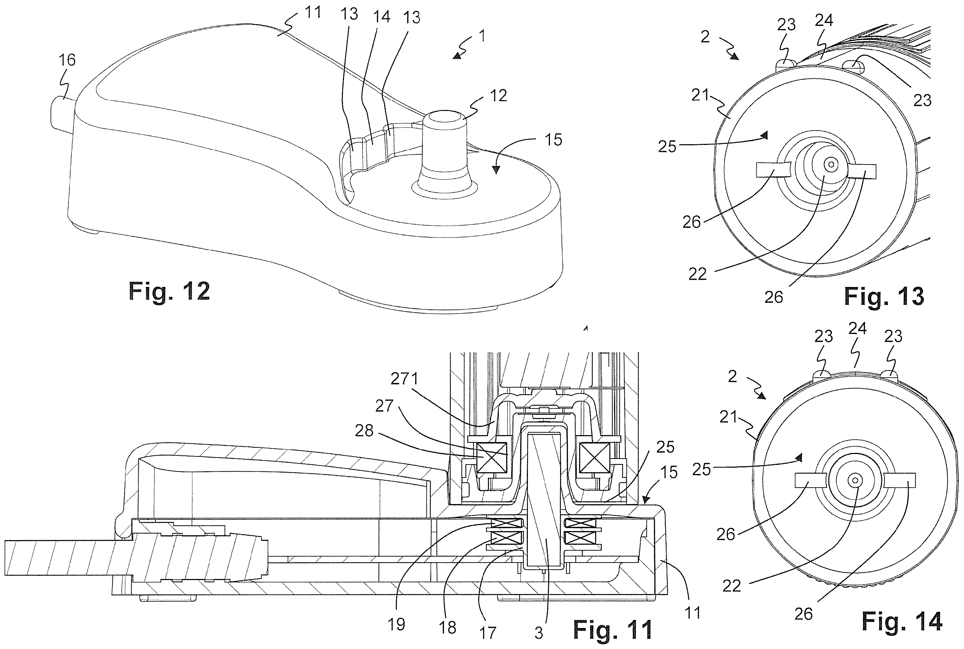

**Figur 11** zeigt in einem senkrechten Querschnitt entlang einer Längsachse des Gerätes nebst den bereits beschriebenen Teilen einen Ferritkern 3 des induktiven Übertragers. Im der gezeigten Ausführungsform ist der Ferritkern 3 Teil des Ladeteils 1. Ein erster Abschnitt des Ferritkerns 3 ist im Zapfen 12 angeordnet.

In anderen Ausführungsformen kann der Ferritkern 3 auch im Handgerät 2 angeordnet sein und in einen Bereich des Ladeteils 1 hinein ragen. In anderen Ausführungsformen kann auch gar kein Ferritkern vorliegen. Im vorliegenden Beispiel in Fig. 11 hat der Ferritkern eine zylindrische Grundform und ist vom Querschnitt her rund, wobei auch andere geschlossene Querschnitte realisiert werden können. In weiteren Ausführungsformen kann ein Topfkern (pot core) oder ein E-Kern oder ein U-Kern vorliegen, jeweils mit entsprechend angeordneten Wicklungen. Bei all den beschriebenen Kernvarianten kann jeweils auch ein mehrteiliger Kern vorliegen, mit einem ersten Kernteil im Ladeteil 1 und einem zweiten Kernteil im Handgerät 2.

Ein zweiter Abschnitt des Ferritkerns 3 liegt in einer Primärwicklung 18, welche mittels eines Ladeteil-Spulenkörpers 17 gehalten ist. Der Ladeteil-Spulenkörper 17 trägt auch eine Detektionswicklung 19. Diese ist ebenfalls um den Ferritkern 3 angeordnet und kann wie eingangs beschrieben eine Messgrösse zur Regelung der einzuspeisenden Leistung liefern.

Im Handgerät 2 ist eine Sekundärwicklung 28 um die Aussparung 22 angeordnet, respektive um einen Abschnitt einer Wand des Bodens 211 respektive des Handgerät-Gehäuses 21, welcher die Form der Aussparung 22 definiert. Die Sekundärwicklung 28 kann durch einen Handgerät-Spulenkörper 27 getragen sein. In einer anderen Ausführungsform ist der Handgerät-Spulenkörper 27 einstückig mit dem Boden 29 geformt. Der Handgerät-Spulenkörper 27 weist einen angeformten, also einstückig mit dem Handgerät-Spulenkörper 27 gebildeten Stützabschnitt 271 auf. Der Stützabschnitt 271 ist aufgrund seiner Form im Zusammenspiel mit seinem Material elastisch verformbar. Wenn der Boden 211 mit dem Handgerät-Spulenkörper 27 in das Handgerät 2 korrekt eingesetzt ist, so drückt der Handgerät-Spulenkörper 27 mit seinem Stützabschnitt 271 in Längsrichtung gegen den Akku 4 und verformt sich dabei elastisch. Der Akku 4 ist dadurch mit einer Vorspannung im Handgerät 2 gehalten. Damit ist mit geringem konstruktivem Aufwand eine federnde Halterung oder Fixierung des Akkus 4 realisiert. Damit können beispielsweise Toleranzen in Längsrichtung ausgeglichen werden, welche sonst zu einer unzuverlässigen elektrischen Kontaktierung des Akkus 4 führen könnten. Solche Toleranzen können insbesondere zwischen dem Boden 211 und dem übrigen Handgerät-Gehäuse 21 auftreten.

Die verschiedenen Teile des Ladeteil-Gehäuses 11 und Handgerät-Gehäuses 21 sind typischerweise aus Kunststoff. Ebenso können die beiden Spulenkörper 17, 27 aus Kunststoff gefertigt sein, insbesondere aus einem weicheren und elastischeren Kunststoff als die beiden Gehäuse 11, 21.

**Figuren 13-14** zeigen Ansichten des Bodens 211 eines Handgeräts. Anschliessend an die Aussparung 22 sind Kerben oder Nuten 26 angeordnet, inbesondere ein Paar von Nuten, welche einander bezüglich der Aussparung 22 gegenüber liegen. Ein flacher runder Gegenstand, beispielsweise eine Münze, kann in die Nuten 26 geführt werden und dann zum Drehen des Bodens 211 verwendet werden. So kann der Boden 211 aus dem Handgerät-Gehäuse 21 geschraubt oder herausgebrochen werden. Dies kann vorteilhaft sein, um den Akku 4 auszuwechseln und/oder zu entsorgen.

In einer Ausführungsform dienen die Nuten 26 auch zum Definieren der gegenseitigen Position von Ladeteil 1 und Handgerät 2 bezüglich Rotation um die Längsachse. Dann sind entsprechende korrespondierende Vorsprünge im unteren Bereich des Zapfens 12, beispielsweise in einem Übergangsbereich zwischen Zapfen 12 und Auflagefläche 15 angeordnet.

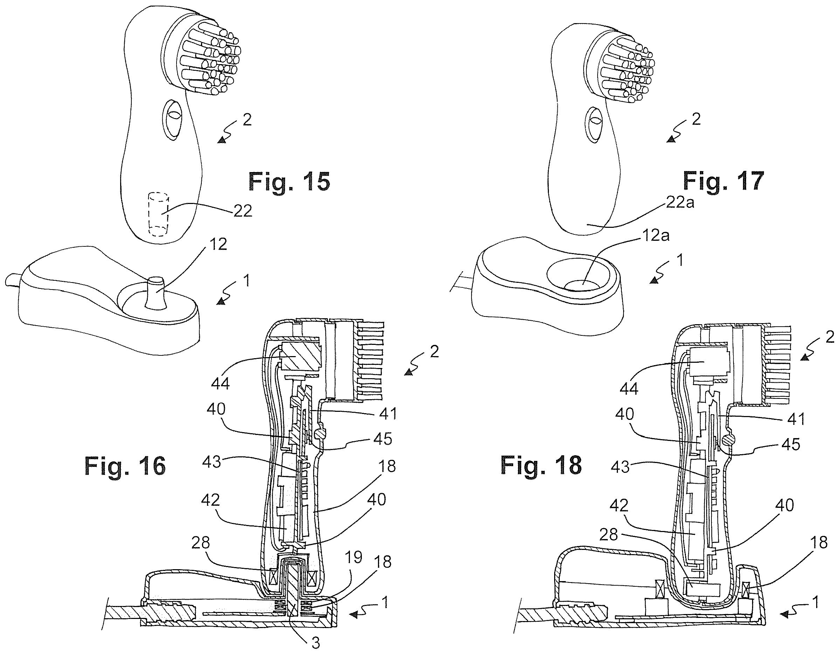

**Figuren 15-18** zeigen Ansichten und Schnitte von weiteren Handgeräten 2, die als Massage- oder Gesichtsbürsten ausgestaltet sind, sowie dazu passend ausgestaltete Ladeteile 1. Figur 16 zeigt einen Schnitt durch die Geräte der Figur 15. Figur 18 zeigt einen Schnitt durch die Geräte der Figur 17. Das Handgerät 2 der Figuren 15 und 16 weist analog zu den bisher beschriebenen Handgeräten 2 der Figuren 7 bis 14 eine Aussparung 22 auf, mittels welcher das Handgerät 2 auf einem Zapfen 12 des Ladeteils 1 gesteckt werden kann. Die Energieübertragung kann ebenfalls unter Einsatz einer Primärwicklung 18, einer Detektionswicklung 19 und einer Sekundärwicklung 28 geschehen, wobei ein Ferritkern 3 zu diesen Wicklungen passend respektive mit diesen Wicklungen zusammenwirkend angeordnet sein kann. Das Handgerät 2 der Figuren 17 und 18 weist anstelle oder zusätzlich zu der Aussparung 22 eine Kontur an einem unteren Ende 22a eines Griffteiles auf, welche passend zu einer Mulde 12a im Ladeteil 1 geformt ist. Das Handgerät 2 kann zur Aufbewahrung und zum Aufladen mit dem unteren Ende 22a in die Mulde 12a gesetzt werden und so in einer stabilen Lage gehalten werden. Zur Energieübertragung können eine Primärwicklung 18 und eine Sekundärwicklung 28 vorliegen, wobei die Primärwicklung 18 das untere Ende 22a des Griffteiles umfängt. Weiter ist auch eine Ausgestaltung mit einer zusätzlichen (in dieser Abbildung nicht gezeigten) Detektionswicklung denkbar.

In den Figuren 16 und 18 ist auch das Innenleben, also innere Komponenten eines Handgerätes, schematisch dargestellt. Insbesondere sichtbar sind ein Antrieb oder Motor 44 als Verbraucher, und ein Akkuträger 40, welcher unter anderem einen Akku 42, eine Printplatte 43 inkl. Schalter oder Taster 45 trägt und an welchem auch ein Schalterdrückhilfsmittel 41 ausgestaltet ist.

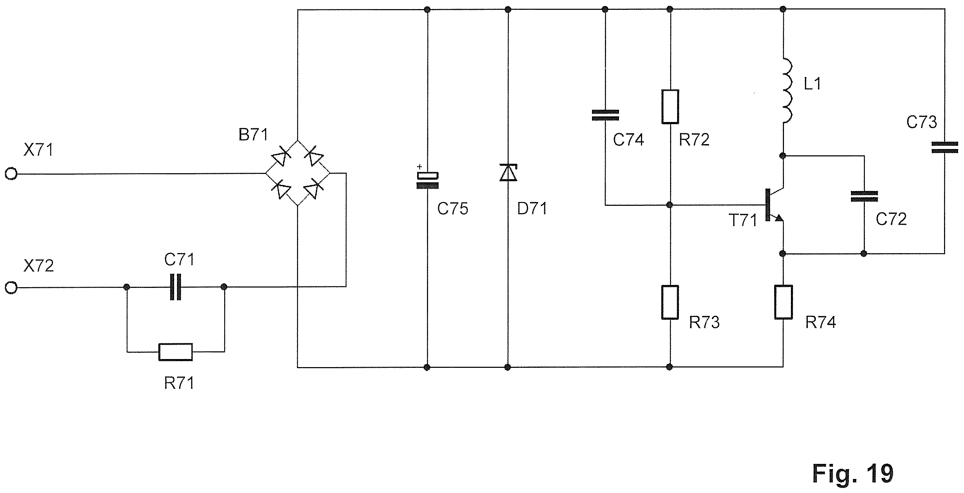

**Figur 19** zeigt eine Schaltung für ein Ladeteil 1, welche besonders einfach zu realisieren ist. Die Schaltung weist die folgenden Elemente auf:
- Einen Colpitts-Oszillator mit der Primärwicklung L1, einer Schwingkreiskapazität C72, einer weiteren Kapazität C73 und einem Widerstand R74, einem Oszillator-Transistor T71 und Basiswiderständen R72, R73.
- Einem Zusatzkondensator C74, der zwischen einem positiven Speiseanschluss und dem Steuereingang des Oszillator-Transistors T71 geschaltet ist. Der Zusatzkondensator C74 kann als Anschwinghilfe dienen.
- Eine Zenerdiode D71, welche zwischen den positiven und einem negativen Speiseanschluss geschaltet ist und eine Speisespannung begrenzt.
- Einen Glättungskondensator C75, welcher zwischen den positiven und den negativen Speiseanschluss geschaltet ist.
- Einen Brückengleichrichter B71, welcher den positiven und den negativen Speiseanschluss aus Wechselspannungsanschlüssen X71, X72 speist.
- Eine Impedanz aus einer Parallelschaltung eines Begrenzungswiderstands R71 und einer Begrenzungskapazität C71, welche zwischen einem der Wechselspannungsanschlüsse X71, X72 und dem Brückengleichrichter B71 geschaltet ist. Die Impedanz kann als Vorwiderstand für den Oszillator betrachtet werden. Sie begrenzt im Wesentlichen die Leistungsaufnahme der Schaltung.

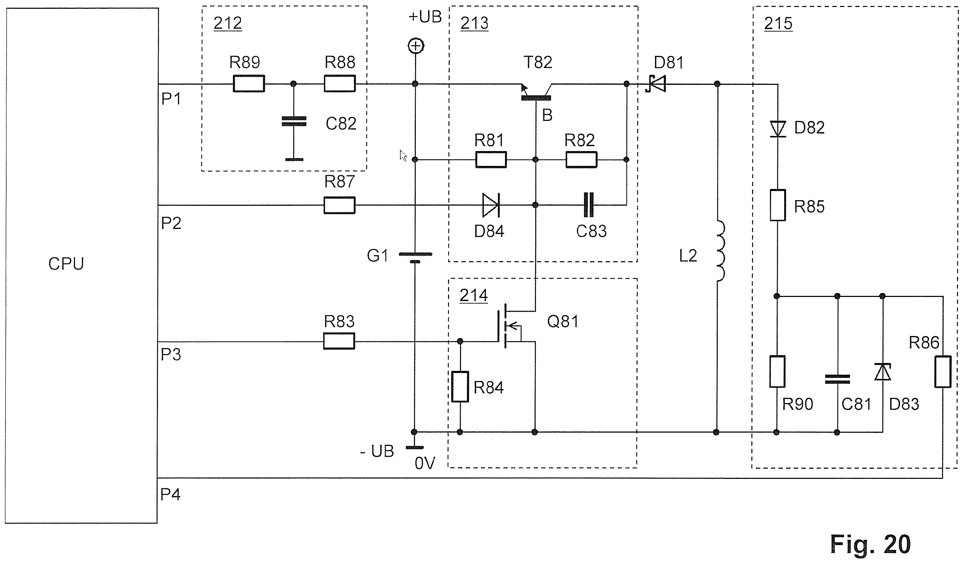

**Figur 20** zeigt eine Ladeschaltung für ein Handgerät 2, bei welcher ein Energiemanagement zur Reduktion der Leistungsaufnahme realisierbar ist. Elemente einer Antriebsschaltung, welche zum Betrieb des Handgeräts 2 auch noch erforderlich ist, sind nicht gezeigt. Die Ladeschaltung wird durch eine Rechen- oder Steuereinheit CPU gesteuert, beispielsweise einen Mikrokontroller. Die Ladeschaltung weist die folgenden Elemente auf:
- Einen positiven Anschluss +UB und einen negativen Anschluss -UB an einen Akku G1.
- Eine Sekundärwicklung L2, welche über eine Speise-Gleichrichterdiode D81, hier beispielhaft eine Schottky-Diode, und einen Trennschalter T82, hier ein Transistor, an den positiven und den negativen Anschluss schaltbar ist und somit den angeschlossenen Akku G1 laden kann.
- Eine Detektionsschaltung 215 mit einer Serieschaltung einer Detektions-Gleichrichterdiode D82 mit einem oberen R85 und einem unteren R90 Spannungsteilerwiderstand, wobei am gemeinsamen Anschlusspunkt der Spannungsteilerwiderstände R85, R90 eine Filterschaltung mit einem Filterkondensator C81 und einer Zenerdiode D83 als Überspannungsschutz parallel zum unteren Spannungsteilerwiderstand R90 geschaltet ist, und der gemeinsame Anschlusspunkt über einen ersten Schutzwiderstand R86 an einen vierten Anschluss P4 der Steuereinheit CPU angeschlossen ist. Der vierte Anschluss P4 fungiert als Eingang und erlaubt somit eine Detektion, ob an der Sekundärwicklung L2 eine Spannung, insbesondere eine Wechselspannung, anliegt. Damit ist feststellbar, ob das Handgerät 2 vom Ladeteil 1 gespeist wird, und somit, ob der Akku geladen werden kann. Oder es kann ein Motor des Handgerätes 2 ausgeschaltet werden, falls er noch eingeschaltet ist, wenn das Handgerät 2 in das Ladeteil 1 gestellt wird.
- Eine Batteriespannungsmessung 212 mit einer Serieschaltung eines zweiten Schutzwiderstandes R89 mit einem RC-Filter aus einem Filterwiderstand R88 und einer Filterkapazität C82. Das RC-Filter filtert insbesondere Störungen durch einen laufenden Motor aus. Die Batteriespannungsmessung ist zwischen den positiven Anschluss und einen ersten Anschluss P1 der Steuereinheit CPU geschaltet. Der erste Anschluss P1 fungiert als Eingang und erlaubt somit eine Messung der Batteriespannung.
- Eine Trennschaltung 213 mit dem Trennschalter T82 und einer Basisversorgung, welche zwischen dem Steuereingang B des Trennschalters T82 und dem gemeinsamen Anschlusspunkt des Trennschalters und der Speise-Gleichrichterdiode D81 geschaltet ist. Die Basisversorgung weist einen Basiswiderstand R82 parallel zu einem Basiskondensator C83 auf. Wenn die Sekundärwicklung L2 eine Sekundärspannung abgibt, erscheint auch am genannten gemeinsamen Anschlusspunkt eine Spannung, und ebenso am Steuereingang B. Dadurch wird der Trennschalter T82 leitend und kann ein Ladestrom im den Akku G1 fliessen. Der Basiskondensator C83 ermöglicht ein schnelles Ansteigen der Spannung am Steuereingang B nachdem die Sekundärspannung ansteigt. Der Basiswiderstand R82 begrenzt anschliessend den Strom in den Steuereingang B. Ein weiterer Basiswiderstand R81 ist zwischen den Steuereingang B und den positiven Anschluss +UB geschaltet, um den Steuereingang auf ein definiertes Potential zu ziehen, wenn keine Spannung von der Speise-Gleichrichterdiode D81 her vorliegt. Die bisher beschriebene Funktion der Trennschaltung 213 ist nicht auf das Funktionieren der Steuereinheit CPU angewiesen. Die Trennschaltung 213 funktioniert also auch dann, wenn der Akku G1 derart weit entladen ist, dass die Steuereinheit nicht in Betrieb ist.
- Eine Boosterschaltung, welche zwischen einen zweiten Anschluss P2 der Steuereinheit CPU und dem Steuereingang B des Trennschalters T82 geschaltet ist, und mit welcher ein Potential am Steuereingang B mittels der Steuereinheit CPU ansteuerbar ist. Diese Boosterschaltung weist beispielsweise einen Schutzwiderstand R87 in Serie mit einer Schutzdiode D84 auf. Der zweite Anschluss P2 ist ein Ausgang, und somit kann, wenn die Steuereinheit CPU in Betrieb ist, der Trennschalter T82 auch von der Steuereinheit CPU aus eingeschaltet oder eingeschaltet gehalten werden, oder es kann, mit anderen Worten, die Durchschaltung des Trennschalters T82 verbessert werden. Bei aktivierter Boosterschaltung ist dies der Fall.
- Eine Ladungsunterdrückungsschaltung 214 mit einem Schalter Q81, insbesondere einem MOSFET, welcher eine Spannung am Steuereingang auf eine feste Referenzspannung ziehen und so ein Einschalten des Trennschalters T82 unterdrücken kann. Beispielsweise kann der Schalter Q81 das Potential am Steuereingang B auf Null ziehen. Der Schalter Q81 ist über einen Spannungsteiler R83, R84 von einem als Ausgang wirkenden dritten Anschluss der Steuereinheit CPU aus ansteuerbar. Damit kann ein Ladevorgang des Akkus G1 durch die Steuereinheit CPU unterbrochen werden. Bei aktivierter Ladungsunterdrückungsschaltung sperrt also der Trennschalter T82 und ist der Ladevorgang des Akkus G1 unterdrückt.

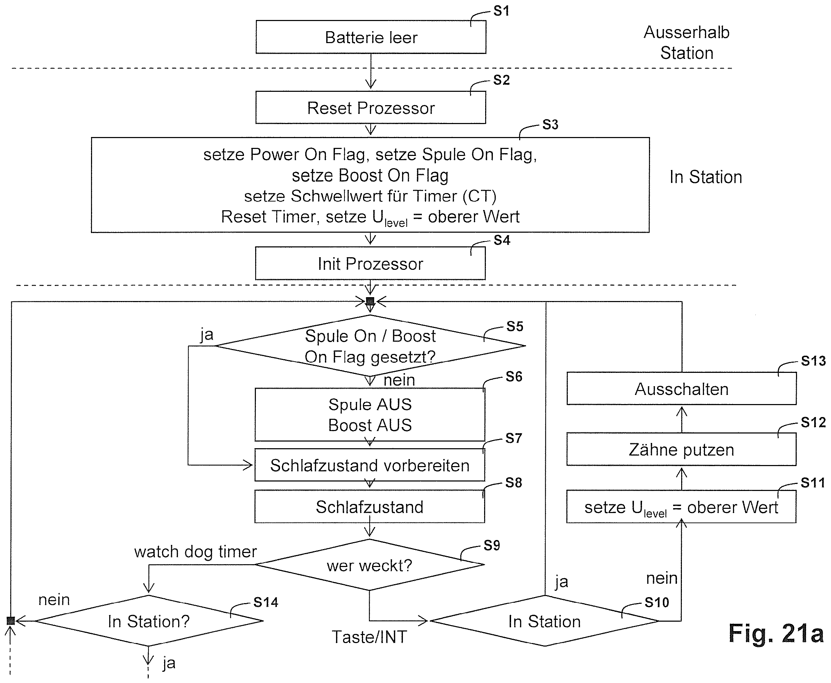

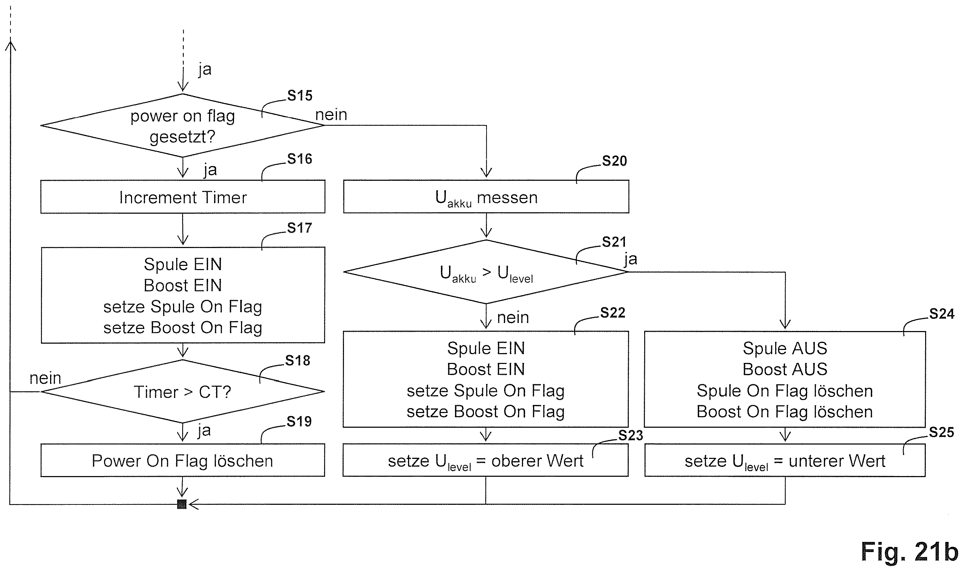

**Figur 21a-21b** zeigt ein Flussdiagramm für ein Verfahren zum Energiemanagement, beispielsweise mittels der in Figur 20 beschriebenen Schaltung. Das Verfahren weist die folgenden Schritte auf, wobei der erste Schritt abgekürzt mit S1 bezeichnet wird, der zweite mit S2, etc.
S1 Dies entspricht einem Ausgangszustand, wenn die Batterie leer ist: die Steuereinheit CPU ist somit nicht in Betrieb. Von hier aus startet das Verfahren neu.
S2 Sobald eine Spannung zur Speisung der Steuereinheit CPU vorliegt, wird ein durch die Steuereinheit CPU selber automatisch ein Reset der Steuereinheit CPU ausgeführt. Dies wird ausgelöst, wenn das Handgerät 2 durch ein Ladeteil 1 gespeist wird.
S3 Interne Flags "Power On", "Spule On" und "Boost On" werden gesetzt. Ein Schwellwert CT für einen Timer wird auf einen vorgegebenen und fest abgespeicherten Wert gesetzt, der eine Mindestladezeit repräsentiert, beispielsweise mehr als 6 Stunden, typischerweise rund 14 Stunden. Der Timer, auch Ladezeitzähler genannt, wird auf Null gesetzt. Ein Schwellwert U_level wird auf einen vorgegebenen, fest abgespeicherten oberen Wert gesetzt.
S4 Die Steuereinheit CPU wird initialisiert. Dabei werden beispielsweise Anschlüsse als Ein- oder Ausgänge definiert, Ausgänge auf vorgegebene Initialwerte gesetzt, Interrupts aktiviert, Variablen, Zähler, PWM-Einheiten und Oszillatoren initialisiert, Funktionsblöcke des Prozessors je nach Bedarf ein- oder ausgeschaltet, etc.
S5 Dies ist der erste Schritt einer wiederholt - solange die Steuereinheit CPU gespeist ist - ausgeführten Schlaufe des Verfahrens: Es wird überprüft, ob die Flags "Spule On" und "Power On" gesetzt sind.
S6 Wenn dies nicht der Fall ist, wird der Ladevorgang unterdrückt ("Spule AUS"), also der Trennschalter T82 geöffnet oder offen gehalten, und es wird die Boosterschaltung deaktiviert ("Boost AUS").
S7 Die Steuereinheit CPU wird auf einen Schlafzustand vorbereitet.
S8 Die Steuereinheit CPU ist im Schlafzustand, in welchem zur Reduktion der Leistungsaufnahme möglichst viele Funktionen ausgeschaltet sind. Ein Watchdog-Timer bleibt aktiv, um die Steuereinheit CPU nach einem vorgegebenen Schlafintervall zu wecken.
S9 Nach dem Aufwachen der Steuereinheit CPU wird überprüft, ob das Aufwachen durch den Watchdog-Timer ausgelöst wurde (wonach bei S14 weitergefahren wird) oder durch Betätigung einer Taste respektive eines entsprechenden Interrupts der Steuereinheit CPU (wonach bei S10 weitergefahren wird).
S10 Es wird, beispielsweise anhand des Signals am vierten Anschluss P4, überprüft, ob sich das Handgerät 2 im Ladeteil 1 befindet respektive durch dieses geladen wird. Wenn ja, wird mit S5 weitergefahren, wenn nein, mit S11.
S11 Ein Schwellwert U_level wird auf einen vorgegebenen, fest abgespeicherten oberen Wert gesetzt.
S12 Der Motor des Handgeräts 2 wird eingeschaltet, beispielsweise zum Antrieb einer Zahnbürste oder einer Gesichts- oder Massagebürste.
S13 Das Ausschalten des Handgeräts 2 durch den Benutzer wird erkannt, und dann mit S5 weitergefahren.
S14 Das Gerät wurde durch den Watchdog-Timer aus dem Schlafzustand geweckt. Es wird überprüft, ob sich das Handgerät 2 im Ladeteil 1 befindet respektive durch dieses geladen wird. Wenn nicht, ist keine Ladung möglich und wird mit S5 weitergefahren, wenn ja, mit S15.
S15 Das Flag "Power On" wird abgefragt. Wenn es gesetzt ist, wird zur Ladung des Akkus mit S16 weitergefahren, wenn nicht, mit S20.
S16 Der Ladezeitzähler wird inkrementiert.
S17 Der Ladevorgang wird eingeschaltet oder bleibt eingeschaltet ("Spule EIN"), also der Trennschalter T82 geschlossen oder geschlossen gehalten, und es wird die Boosterschaltung aktiviert oder bleibt aktiviert ("Boost EIN"). Die entsprechenden beiden Flags werden gesetzt.
S18 Es wird überprüft, ob der Ladezeitzähler den Schwellwert CT überschritten hat. Wenn nein, wird mit S5 weitergefahren, wenn nein, mit S19.
S19 Es wurde die vorgegebene Ladezeit erreicht und es kann der Ladevorgang gestoppt werden. Das Flag "Power On" wird gelöscht und mit S5 weitergefahren. Beim nächsten Durchlauf von S15 wird dadurch anders verzweigt.
S20 Es wird die Batteriespannung U akku gemessen.
S21 Es wird die Batteriespannung U akku mit dem Schwellwert U_level verglichen. Wenn sie den Schwellwert übersteigt, wird mit S24 weitergefahren, wenn nicht, mit S22.
S22 Der Ladevorgang wird eingeschaltet ("Spule EIN") und es wird die Boosterschaltung aktiviert ("Boost EIN"). Die entsprechenden beiden Flags werden gesetzt.
S23 Der Schwellwert U_level wird auf den oberen Wert gesetzt. Es wird mit S5 weitergefahren.
S24 Der Ladevorgang wird ausgeschaltet oder bleibt ausgeschaltet ("Spule AUS") und es wird die Boosterschaltung deaktiviert oder bleibt deaktiviert ("Boost AUS"). Die entsprechenden beiden Flags werden gelöscht.
S25 Der Schwellwert U_level wird auf einen vorgegebenen, fest abgespeicherten unteren Wert gesetzt. Es wird mit S5 weitergefahren.

Die Verwendung des oberen und des unteren Schwellwertes für U_level führt dazu, dass nach einer Benutzung des Handgeräts 2, insbesondere nach Betrieb des Motors, oder nach einem Unterschreiten des unteren Schwellwertes die Batterie wieder bis zum oberen Schwellwert aufgeladen wird. Nachdem die Batteriespannung den oberen Schwellwert erreicht hat, bleibt der Ladevorgang ausgeschaltet, bis entweder der untere Schwellwert unterschritten wird oder das Handgerät 2 benutzt wird. Der obere Schwellwert kann, je nach Typ des Akkus, beispielsweise 1400 mV betragen, der untere beispielsweise 1300 mV.

Nachdem der Akku leer gelaufen ist, wird ungeachtet der Batteriespannung der Ladevorgang während der Mindestladezeit durchgeführt

Die gemachten Beschreibungen zu den spezifischen Figuren lassen sich selbstverständlich auch auf andere Figuren übertragen, die gleiche oder ähnliche Ausprägungen zeigen und in welchen die Ausprägungen nicht im gleichen Detail beschrieben sind.

## Patentansprüche

1. **Handgerät** (2) mit kontaktloser Energieversorgung, aufweisend eine Steuereinheit (CPU), einen Akku (G1), eine Batteriespannungsmessung (212) zum Messen einer Akkuspannung, eine Detektionsschaltung (215) zum Detektieren, ob das Handgerät (2) durch ein Ladeteil (1) mit Energie versorgbar ist, und eine Trennschaltung (213), womit ein Laden des Akkus (G1) unterbrechbar ist, wobei die Steuereinheit (CPU) dazu eingerichtet ist,
• falls die Batteriespannung einen Mindestwert unterschritten hat, beispielsweise indem eine Mindestspannung zum Betrieb der Steuereinheit (CPU) unterschritten wurde, das Laden des Akkus ungeachtet der Akkuspannung während einer vorgegebenen Mindestladezeit durchzuführen,
**dadurch gekennzeichnet, dass** die Steuereinheit (CPU) dazu eingerichtet ist,
• falls das Laden des Akkus vor Erreichen der Mindestladezeit unterbrochen wird, und anschliessend das Handgerät (2) wieder durch das Ladeteil (1) mit Energie versorgbar ist, das Laden des Akkus wieder aufzunehmen, bis die Mindestladezeit erreicht ist.

2. Handgerät (2), gemäss Anspruch 1, wobei eine Ladezeit nur während Zeitfenstern hochgezählt wird, in denen das Laden des Akkus stattfindet.

3. Handgerät (2), gemäss Anspruch 1 oder 2, wobei die Steuereinheit (CPU) dazu eingerichtet ist,
• nachdem die Mindestladezeit erreicht worden ist und das Handgerät (2) weiterhin durch das Ladeteil (1) mit Energie versorgbar ist, das Laden des Akkus wieder aufzunehmen, falls die Akkuspannung einen unteren Schwellwert unterschreitet.

4. Handgerät (2), gemäss Anspruch 3, wobei die Steuereinheit (CPU) dazu eingerichtet ist,
• das Laden des Akkus wieder zu unterbrechen, falls die Akkuspannung einen oberen Schwellwert überschreitet.

5. **Verfahren zum Laden** eines Energiespeichers eines mobilen Elektrokleingerätes mit kontaktloser Energieversorgung, wobei das mobile Elektrokleingerät eine Steuereinheit (CPU), einen Akku (G1), eine Batteriespannungsmessung (212) zum Messen einer Akkuspannung, eine Detektionsschaltung (215) zum Detektieren, ob das Handgerät (2) durch ein Ladeteil (1) mit Energie versorgbar ist, und eine Trennschaltung (213), womit ein Laden des Akkus (G1) unterbrechbar ist, aufweist, wobei das Verfahren den folgenden Schritt aufweist:
• falls die Batteriespannung einen Mindestwert unterschritten hat, beispielsweise indem eine Mindestspannung zum Betrieb der Steuereinheit (CPU) unterschritten wurde, das Laden des Akkus ungeachtet der Akkuspannung während einer vorgegebenen Mindestladezeit durchzuführen,
**dadurch gekennzeichnet, dass** das Verfahren den folgenden Schritt aufweist:
• falls das Laden des Akkus vor Erreichen der Mindestladezeit unterbrochen wird, und anschliessend das Handgerät (2) wieder durch das Ladeteil (1) mit Energie versorgbar ist, das Laden des Akkus wieder aufzunehmen, bis die Mindestladezeit erreicht ist.

## Claims

1. A **hand-held device** (2) with a contactless energy supply, comprising: a control unit (CPU), a battery (G1), a battery voltage measurement (212) for measuring a battery voltage, a detection circuit (215) for detecting as to whether the hand-held device (2) is suppliable with energy by a charging part (1), and an isolating circuit (213), by which a charging of the battery (G1) can be interrupted, wherein the control device (CPU) is configured,
• in the case that the battery voltage has fallen short of a minimum value, for example by way of a minimum voltage for operation of the control unit (CPU) having been fallen short of, to carry out the charging of the battery during a defined minimum charging time, irrespective of the battery voltage,
**characterised in that** the control unit (CPU) is configured,
• to reassume the charging of the battery, until the minimum charging time is reached, in the case that the charging of the battery is interrupted before reaching the minimum charging time, and the hand-held device (2) is subsequently again suppliable with energy by the charging part (1).

2. A hand-held device (2), according to claim 1, wherein a charging time is counted only during time windows in which the charging of the battery takes place.

3. A hand-held device (2), according to claim 1 or 2, wherein the control unit (CPU) is configured,
• after the minimum charging time has been reached and the hand-held device (2) continues to be suppliable with energy by the charging part (1), to resume the charging of the battery, in the case that the battery voltage falls short of a lower threshold value.

4. A hand-held device (2), according to claim 3, wherein the control unit (CPU) is configured
• to again interrupt the charging of the battery, in the case that the battery voltage exceeds an upper threshold value.

5. A **method for charging** an energy store of a small mobile electrical device with a contactless energy supply, wherein the small mobile electrical device comprises a control unit (CPU), a battery (G1), a battery voltage measurement (212) for measuring a battery voltage, a detection circuit (215) for detecting as to whether the hand-held device (2) is suppliable with energy by a charging part (1), and an isolating circuit (213), by which means a charging of the battery (G1) can be interrupted, wherein the method comprises the following step:
• carrying out the charging of the battery during a defined minimum charging time irrespective of the battery voltage, in the case that the battery voltage has fallen short of a minimum value, for example by way of a minimum voltage for operation of the control unit (CPU) having been fallen short of,
**characterised in that** the method comprises the following step:
• to reassume the charging of the battery, until the minimum charging time is reached, in the case that the charging of the battery is interrupted before reaching the minimum charging time, and the hand-held device (2) is subsequently again suppliable with energy by the charging part (1).

## Revendications

1. Appareil manuel (2) alimenté en énergie sans contact, présentant une unité de commande (CPU), un accumulateur (GI), une mesure (212) de la tension de batterie qui mesure la tension au bornes de l'accumulateur, un circuit de détection (215) qui détecte si l'appareil manuel (2) peut être alimenté en énergie par une partie de charge (1) et un circuit de séparation (213) qui permet d'interrompre la recharge de l'accumulateur (GI), l'unité de commande (CPU) étant conçue pour
- exécuter la recharge de l'accumulateur pendant une durée minimale de recharge quelle que soit la tension aux bornes de l'accumulateur au cas où la tension de batterie est descendue en dessous d'une valeur minimale, par exemple parce que la tension minimale de fonctionnement de l'unité de commande (CPU) n'est plus atteinte,
**caractérisé en ce que**
- la recharge de l'accumulateur est reprise jusqu'à ce que la durée minimale de recharge soit atteinte au cas où la recharge de l'accumulateur a été interrompue avant que la durée minimale de recharge ait été atteinte et qu'ensuite l'appareil manuel (2) peut être alimenté en énergie par la partie de charge (1).

2. Appareil manuel (2) selon la revendication 1, dans lequel la durée de recharge comptée n'est cumulée que pendant les fenêtres temporelles dans lesquelles a lieu la recharge de l'accumulateur.

3. Appareil manuel (2) selon les revendications 1 ou 2, dans lequel l'unité de commande (CPU) est conçue pour reprendre la recharge de l'accumulateur au cas où la tension aux bornes de l'accumulateur n'atteint plus la valeur d'un seuil inférieur après que la durée minimale de recharge a été atteinte et qu'en outre l'appareil manuel (2) peut être alimenté en énergie par la partie de charge (1).

4. Appareil manuel (2) selon la revendication 1, dans lequel l'unité de commande (CPU) est conçue pour interrompre la recharge de l'accumulateur au cas où la tension aux bornes de l'accumulateur dépasse la valeur d'un seuil supérieur.

5. Procédé de recharge de la réserve en énergie d'un petit appareil électrique portable doté d'une alimentation en énergie sans contact, présentant une unité de commande (CPU), un accumulateur (GI), une mesure (212) de la tension de batterie qui mesure la tension au bornes de l'accumulateur, un circuit de détection (215) qui détecte si l'appareil manuel (2) peut être alimenté en énergie par une partie de charge (1) et un circuit de séparation (213) qui permet d'interrompre la recharge de l'accumulateur (GI), le procédé présentant l'étape suivante :
- exécuter la recharge de l'accumulateur pendant une durée minimale de recharge quelle que soit la tension aux bornes de l'accumulateur au cas où la tension de batterie est descendue en dessous d'une valeur minimale, par exemple parce que la tension minimale de fonctionnement de l'unité de commande (CPU) n'est plus atteinte,
**caractérisé en ce que**
- la recharge de l'accumulateur est reprise jusqu'à ce que la durée minimale de recharge soit atteinte au cas où la recharge de l'accumulateur a été interrompue avant que la durée minimale de recharge ait été atteinte et qu'ensuite l'appareil manuel (2) peut être alimenté en énergie par la partie de charge (1).
